# EUROPEAN PATENT SPECIFICATION

(11) **EP 4 277 348 B1**
(45) Date of publication and mention of the grant of the patent: **02.12.2026**
(21) Application number: 21918502.2
(22) Date of filing: 14.01.2021
(51) Int. Cl.: H04W 36/00, H04W 72/04, H04W 72/30, H04L 47/10, H04L 49/201

(54) **COMMUNICATION METHOD, APPARATUS AND COMPUTER PROGRAM**
KOMMUNIKATIONSVERFAHREN, KOMMUNIKATIONSVORRICHTUNG UND COMPUTERPROGRAMM
PROCÉDÉ DE COMMUNICATION, APPAREIL DE COMMUNICATION ET PROGRAMME INFORMATIQUE

(43) Date of publication of application: 15.11.2023
(73) Proprietor: Huawei Technologies Co., Ltd., Shenzhen, Guangdong 518129 (CN)
(72) Inventor: XU, Bin, Shenzhen, Guangdong 518129 (CN); LI, Bingzhao, Shenzhen, Guangdong 518129 (CN); CAO, Zhenzhen, Shenzhen, Guangdong 518129 (CN); WANG, Yan, Shenzhen, Guangdong 518129 (CN)
(74) Representative: Pfenning, Meinig & Partner mbB
(86) International application number: PCT/CN2021/071952
(87) International publication number: WO 2022/151294

(56) References cited:
- CN-A- 102 118 355
- CN-A- 111 866 975
- US-A1- 2005 272 459
- US-A1- 2014 228 037
- HUAWEI ET AL: "KI#7: Conclusion update", vol. SA WG2, no. e-meeting; 20201116 - 20201120, 9 November 2020 (2020-11-09), XP051952772, Retrieved from the Internet <URL:https://ftp.3gpp.org/tsg_sa/WG2_Arch/TSGS2_142e_Electronic/Docs/S2-2008735.zip S2-2008735_KI#7 Conclusion update_v1.5.docx> [retrieved on 20201109]
- "3rd Generation Partnership Project; Technical Specification Group Services and System Aspects; Study on architectural enhancements for 5G multicast-broadcast services (Release 17)", 30 November 2020 (2020-11-30), XP051963796, Retrieved from the Internet <URL:https://ftp.3gpp.org/tsg_sa/TSG_SA/TSGs_90E_Electronic/Docs/SP-200964.zip 23757-120.zip 23757-120.docx> [retrieved on 20201130]
- QUALCOMM INCORORPORATED: "Solution to KI#7: Mobility between 5G MBS supporting and 5G MBS non- supporting NG RAN nodes", 3GPP DRAFT; S2-2004223, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic meeting; 20200601 - 20200612, 22 May 2020 (2020-05-22), Mobile Competence Centre ; 650, route des Lucioles ; F-06921 Sophia-Antipolis Cedex ; France , XP051890227
- HUAWEI, HISILICON, OPPO: "KI#7, New Solution: Inter-RAN node MBS Session Handover", 3GPP DRAFT; S2-2004510, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20200601 - 20200612, 14 June 2020 (2020-06-14), Mobile Competence Centre ; 650, route des Lucioles ; F-06921 Sophia-Antipolis Cedex ; France , XP051898913

## Description

### TECHNICAL FIELD

This application relates to the field of communication technologies, and in particular, to a communication method and apparatus.

### BACKGROUND

A multicast and broadcast service (multicast and broadcast service, MBS) is a service transmitted by an access network device to a plurality of terminal devices. A common MBS includes a live broadcast service, a public security service, a batch software update service, and the like.

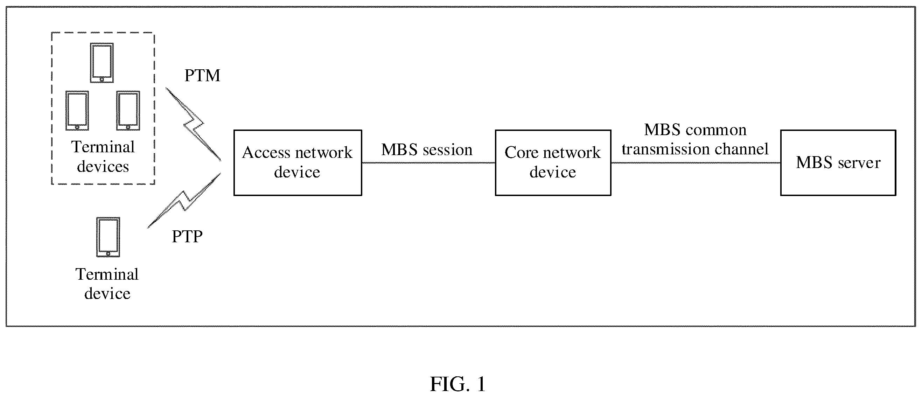

As shown in FIG. 1, in a transmission process, an MBS is transmitted to a terminal device sequentially through an MBS server, a core network device, and an access network device. The MBS is transmitted between the MBS server and the core network device through a common transmission channel (MBS service). The MBS is transmitted between the core network device and the access network device through a common transmission channel MBS session (MBS session), and each MBS session includes at least one MBS quality of service (quality of service, QoS) flow (flow). The MBS is transmitted between the access network device and the terminal device through an MBS radio bearer (MBS radio bearer, MRB). The MBS usually has two transmission modes: a point-to-multipoint (point-to-multipoint, PTM) transmission mode and a point-to-point (point-to-point, PTP) transmission mode.

In a mobile communication system, in a moving process, the terminal device needs to be handed over from one cell to another cell as signal strength of each cell changes. However, when a target base station does not support a multicast and broadcast transmission mode, in a process of handing over the terminal device to the target base station, the MBS cannot continue to be received in the multicast and broadcast mode. Consequently, service continuity of the MBS in the handover process of the terminal device cannot be ensured.
3GPP TR 23.757 V1.2.0 relates to 3rd Generation Partnership Project; Technical Specification Group Services and System Aspects; Study on architectural enhancements for 5G multicast-broadcast services (Release 17).
3GPP draft document S2-2008735 relates to a method of Reliable delivery method switching between unicast and multicast. The 5GC need provide the information of linkage between the Multicast QoS flow and the corresponding mapped unicast QoS flow to the UE and NG-RAN.
US20050272459A1 discloses a method for referencing a physical channel carrying point-to-multipoint service data in a wireless communication system. The present invention utilizes an identifier to reference specific physical channel configurations previously sent to a mobile terminal from a network. The identifier may reference an entry in a list of physical channel configuration in a specific message. Alternatively, a physical channel configuration in a first message is first allocated a specific identity. Then, a specific identifier referencing the specific identity is used in a second message to identify the physical channel configuration in the first message.

### SUMMARY

This application provides a communication method, apparatus and computing program to resolve a conventional-technology problem that service continuity of an MBS cannot be ensured when a terminal device is handed over from a cell that supports a multicast and broadcast transmission mode to a cell that does not support the multicast and broadcast transmission mode.

The following technical solutions are used in this application, to achieve the foregoing objective. The invention is set out in the appended set of claims.

It should be understood that descriptions of technical features, technical solutions, beneficial effect, or similar words in this application do not imply that all features and advantages can be implemented in any individual embodiment. On the contrary, it may be understood that the descriptions of the features or the beneficial effect mean that at least one embodiment includes a specific technical feature, technical solution, or beneficial effect. Therefore, the descriptions of the technical features, the technical solutions, or the beneficial effect in this specification may not necessarily be specific to a same embodiment. Further, the technical features, the technical solutions, and the beneficial effect described in embodiments may be combined in any appropriate manner. A person skilled in the art may understand that an embodiment may be implemented without one or more specific technical features or technical solutions, or beneficial effect in a specific embodiment. In other embodiments, additional technical features and beneficial effect may be identified in a specific embodiment that does not reflect all embodiments.

### BRIEF DESCRIPTION OF DRAWINGS

FIG. 1 is a schematic diagram of a transmission process of an MBS according to this application;
FIG. 2 is a diagram of a system architecture of a communication system according to an embodiment of this application;
FIG. 3 is a diagram of a system architecture of another communication system according to an embodiment of this application;
FIG. 4 is a schematic diagram of an architecture of a user plane protocol stack according to an embodiment of this application;
FIG. 5 is a schematic flowchart of a cell measurement and handover method according to an embodiment of this application;
FIG. 6 is a schematic flowchart of a communication method which does not form part of the invention as defined by the appended claims;
FIG. 7 is a schematic flowchart of another communication method which does not form part of the invention as defined by the appended claims;
FIG. 8 is a schematic diagram of configurations of an MRB and a DRB according to an embodiment of this application;
FIG. 9 is a schematic flowchart of still another communication method according to an embodiment of this application;
FIG. 10 is a schematic flowchart of yet still another communication method according to an embodiment of this application;
FIG. 11 is a schematic flowchart of a further communication method which does not form part of the invention as defined by the appended claims;
FIG. 12 is a schematic diagram of a structure of a communication apparatus according to an embodiment of this application;
FIG. 13 is a schematic diagram of a hardware structure of a communication apparatus according to an embodiment of this application;
FIG. 14 is a schematic diagram of a hardware structure of a communication apparatus according to an embodiment of this application;
FIG. 15 is a schematic diagram of a hardware structure of a terminal device according to an embodiment of this application; and
FIG. 16 is a schematic diagram of a hardware structure of an access network device according to an embodiment of this application.

### DESCRIPTION OF EMBODIMENTS

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, a word "example", "for example", or the like is used to represent giving an example, an illustration, or a description. Any embodiment or design scheme described as an "example" or "for example" in this application should not be explained as being more preferred or having more advantages than another embodiment or design scheme. Specifically, use of the word "example", "for example", or the like is intended to present a related concept in a specific manner.

A communication system in embodiments of this application includes but is not limited to a long term evolution (long term evolution, LTE) system, a 5th-generation (5th-generation, 5G) system, a new radio (new radio, NR) system, a wireless local area network (wireless local area network, WLAN) system, a future evolved system, or a system converging a plurality of communication technologies. A 4G system may also be referred to as an evolved packet system (evolved packet system, EPS). In the 4G system, a core network may be referred to as an evolved packet core (evolved packet core, EPC), and an access network may be referred to as long term evolution (long term evolution, LTE). In the 5G system, a core network may be referred to as a 5GC (5G core), and an access network may be referred to as new radio (new radio, NR). For ease of description, this application is described below by using an example in which this application is applied to the 5G system. However, it may be understood that this application is also applicable to the 4G system, a 3rd generation (3rd Generation, 3G) system, and the like. This is not limited. For example, a method provided in embodiments of this application may be specifically applied to an evolved-universal terrestrial radio access network (evolved-universal terrestrial radio access network, E-UTRAN) and a next generation-radio access network (next generation-radio access network, NG-RAN) system.

An access network device in embodiments of this application is a network-side entity configured to send a signal, receive a signal, or send a signal and receive a signal. The access network device may be an apparatus that is deployed in a radio access network (radio access network, RAN) and that provides a wireless communication function for a terminal device, for example, may be a TRP, a base station (for example, an evolved NodeB (evolved NodeB, eNB or eNodeB), a next generation node base station (next generation node base station, gNB), or a next generation eNB (next generation eNB, ng-eNB)), various forms of control nodes (for example, a network controller, or a radio controller (for example, a radio controller in a cloud radio access network (cloud radio access network, CRAN) scenario)), or a road side unit (road side unit, RSU). Specifically, the access network device may be a macro base station, a micro base station (which is also referred to as a small cell), a relay station, an access point (access point, AP), or the like in various forms, or may be an antenna panel of a base station. The control node may be connected to a plurality of base stations, and configure resources for a plurality of terminal devices that fall within coverage of the plurality of base stations. In systems using different radio access technologies (radio access technologies, RATs), names of devices having a base station function may be different. For example, the base station may be referred to as an eNB or an eNodeB in an LTE system, and may be referred to as a gNB in a 5G system or an NR system. A specific name of the base station is not limited in this application. Alternatively, the access network device may be an access network device or the like in a future evolved public land mobile network (public land mobile network, PLMN).

A terminal device in embodiments of this application is a user-side entity configured to receive a signal, send a signal, or receive a signal and send a signal. The terminal device is configured to provide one or more of a voice service and a data connectivity service for a user. The terminal device may also be referred to as user equipment (user equipment, UE), a terminal, an access terminal, a subscriber unit, a subscriber station, a mobile station, a remote station, a remote terminal, a mobile device, a user terminal, a wireless communication device, a user agent, or a user apparatus. The terminal device may be a vehicle-to-everything (vehicle-to-everything, V2X) device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), or a new energy vehicle (new energy vehicle). Alternatively, the terminal device may be a device-to-device (device-to-device, D2D) device, for example, an electricity meter or a water meter. Alternatively, the terminal device may be a mobile station (mobile station, MS), a subscriber unit (subscriber unit), an uncrewed aerial vehicle, an internet of things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device having a wireless communication function, a computing device or another processing device connected to a wireless modem, a vehicle-mounted device, or a wearable device (which may also be referred to as a wearable intelligent device). The terminal device may alternatively be a terminal device in a next-generation communication system, for example, a terminal device in a 5G system, a terminal device in a future evolved PLMN, or a terminal device in an NR system.

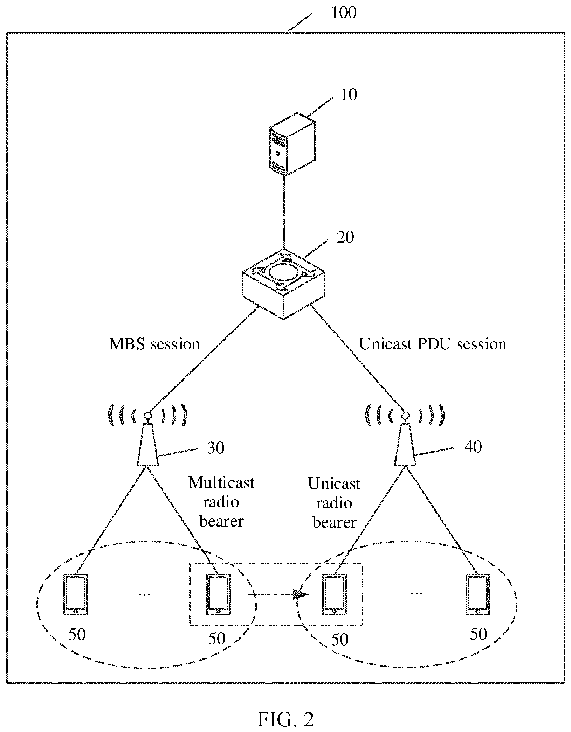

A communication method provided in embodiments of this application may be applied to a communication system 100 shown in FIG. 2. As shown in FIG. 2, the communication system 100 includes an MBS server 10, a core network device 20, a first access network device 30, a second access network device 40, and a terminal device 50.

The MBS server 10 is configured to provide an MBS.

The core network device 20 is configured to: receive the MBS from the MBS server, and send the MBS to an access network device (the first access network device or the second access network device).

The first access network device 30 is an access network device (namely, a source base station) currently accessed by the terminal device 50. The first access network device 30 is configured to provide a network service for the terminal device before the terminal device performs cell handover. For example, before cell handover, the first access network device 30 is configured to: receive the MBS from the core network device 20, and send the MBS to the terminal device 50.

The second access network device 40 is an access network device (namely, a target base station) to which the terminal device 50 is to be handed over. The second access network device is configured to provide a network service for the terminal device after the terminal device performs cell handover. For example, after cell handover, the second access network device 40 is configured to: receive the MBS from the core network device 20, and send the MBS to the terminal device 50.

The terminal device 50 is configured to: communicate with the access network device, and receive data from the access network device, or send data to the access network device. For example, the terminal device 50 is configured to receive the MBS from the access network device.

In this embodiment of this application, the first access network device is an access network device that supports a multicast and broadcast transmission mode, and the second access network device is an access network device that does not support the multicast and broadcast transmission mode. The MBS is transmitted between the core network device and the first access network device through an MBS session, and the MBS is transmitted between the core network device and the second access network device through a unicast PDU session. The MBS is transmitted between the first access network device and the terminal device through a multicast radio bearer (MRB), and a unicast service is transmitted between the first access network device and the terminal device through a unicast radio bearer. A unicast service is transmitted between the second access network device and the terminal device through a unicast radio bearer.

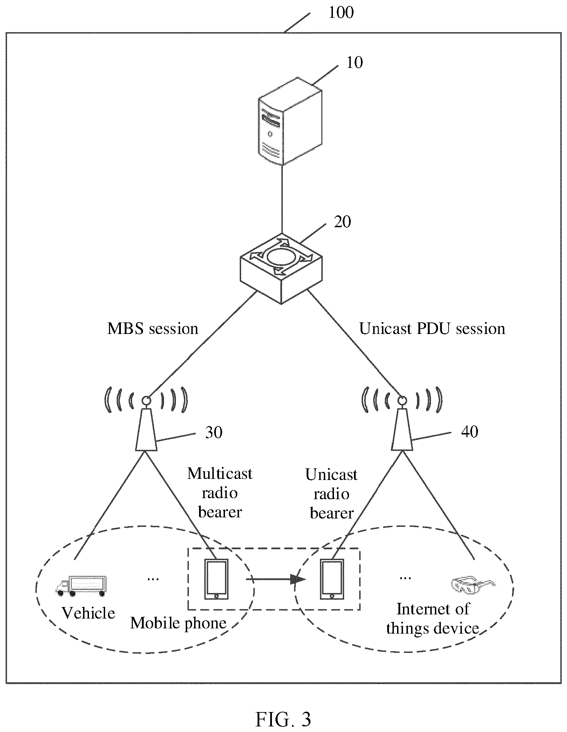

With reference to FIG. 2, as shown in FIG. 3, the terminal device may be any terminal device that has a data receiving function and/or a data sending function, for example, a mobile phone, a vehicle, or an internet of things device shown in FIG. 3. In addition, the terminal device may alternatively be a device that has a data receiving capability, for example, a public security device that is not shown in FIG. 3. A type of the terminal device is not limited in this application.

Currently, when the terminal device communicates with the access network device, there is a corresponding protocol stack structure between the terminal device and the access network device, and the terminal device communicates with the access network device based on the protocol stack structure.

In an example, a user plane protocol stack structure used by the terminal device and the access network device includes a radio resource control (radio resource control, RRC) layer, a service data adaptation protocol (service data adaptation protocol, SDAP) layer, a PDCP layer, an RLC layer, a media access control (media Access Link control, MAC) layer, and a physical (physical, PHY) layer. The PHY layer is located at a bottom layer (layer 1), the MAC layer, the RLC layer, the PDCP layer, and the SDAP layer belong to a second layer (layer 2), and the RRC layer belongs to a third layer (layer 3).

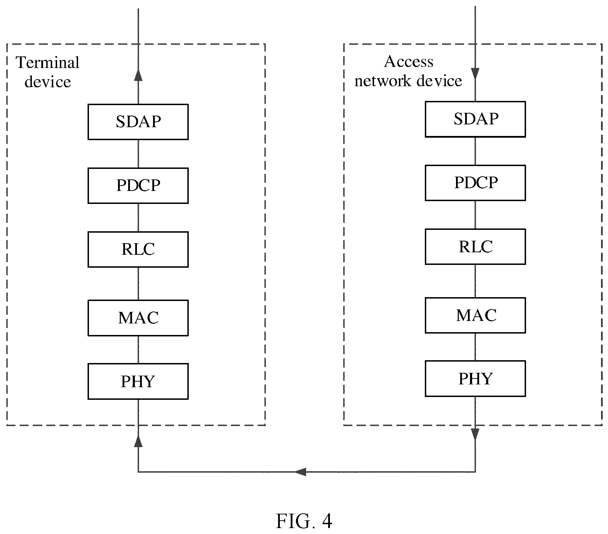

As shown in FIG. 4, for a user plane protocol stack for transmission of the MBS, the PHY is located at the bottom layer, the MAC layer is located above the PHY layer, the RLC layer is located above the MAC layer, the PDCP layer is located above the RLC layer, and the SDAP layer is located above the PDCP layer.

The MBS is usually a service sent by the access network device to the terminal device. As a result, when the MBS is transmitted, a transmission procedure of the MBS is as follows.

The MBS first arrives at an SDAP layer of the first access network device, is transmitted to a corresponding PDCP entity after being mapped by the SDAP layer, is transmitted to an RLC layer and a MAC layer after being processed by a PDCP layer of the first access network device, is sent from a PHY layer after being correspondingly processed, and is transmitted to the terminal device through an air interface.

Protocol layers of the terminal device sequentially perform corresponding processing on a data packet in a processing order opposite to that of the first access network device.

On a first access network device side and a terminal device side, processing of the data packet at layers may be visually combined to be referred to as a radio bearer. Each piece of data in the radio bearer needs to be processed at each layer, and each layer has a corresponding functional entity to perform a corresponding function, for example, a PDCP entity at a PDCP layer.

Each radio bearer configuration includes one PDCP entity, the radio bearer configuration is associated with at least one RLC entity, and each RLC entity corresponds to one logical channel.

The protocol stack structure between the terminal device and the access network device is described above.

In a current mobile communication system, there is a case in which a plurality of cells cover a same location. When the terminal device is located at the same location covered by the plurality of cells, the terminal device needs to select to access a cell with strongest signal strength. In this way, the terminal device transmits service data on the cell with the strongest signal strength, to improve data transmission quality of the terminal device.

In a process in which the terminal device moves, strength of a signal received by the terminal device from each cell continuously changes.

For example, when the terminal device is moving away from a currently accessed cell (denoted as a cell A), strength of a signal received by the terminal device from the cell A continuously decreases. When the strength of the signal received by the terminal device from the cell A decreases to a specific value, if the terminal device continues to transmit a service on the cell A, a case, for example, an interruption, congestion, or even a disconnection, is caused to the service.

To ensure transmission quality of the service of the terminal device, in a movement process, if the terminal device determines that signal strength of a neighboring cell (denoted as a cell B) of the cell A is greater than the signal strength of the cell A, the terminal device needs to report the event (to be specific, the signal strength of the cell B is greater than the signal strength of the cell A) to the access network device, to trigger the access network device to initiate a handover procedure, so as to hand over the terminal device from the cell A to the cell B.

In this way, the terminal device can always keep transmitting the service on a cell with stronger signal strength, to ensure the transmission quality of the service of the terminal device.

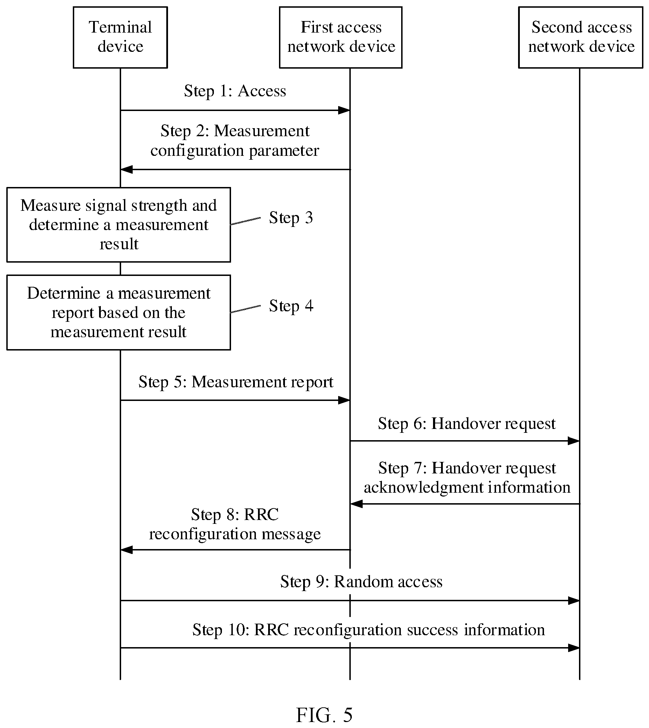

As shown in FIG. 5, currently, a method for performing cell measurement and handover by the terminal device and the first access network device includes the following step 1 to step 10.

Step 1: The terminal device accesses the first access network device.

The first access network device may be the cell A.

In a possible implementation, that the terminal device accesses the access network device may be implemented as follows: The terminal device camps on the cell A, and enters a connected state.

Step 2: The first access network device sends a measurement configuration parameter to the terminal device. Correspondingly, the terminal device receives the measurement configuration parameter from the first access network device.

In a possible implementation, the measurement configuration parameter is carried in an RRC reconfiguration (RRCReconfiguration) message sent by the first access network device to the terminal device. In other words, the RRC reconfiguration message sent by the first access network device to the terminal device includes the measurement configuration parameter (MeasConfig).

The measurement configuration parameter recorded in this embodiment of this application includes at least one of the following information: measurement frequency/cell information, a reporting threshold configuration, a filtering parameter configuration, a timer duration configuration, and the like.

The measurement frequency/cell information indicates a cell to be measured and a frequency corresponding to the cell. The measurement frequency/cell information includes information about a cell currently accessed by the terminal device. Alternatively, the measurement frequency cell information may include only information about a frequency that needs to be measured. In this case, the information about the currently accessed cell may be indicated by the RRC reconfiguration message.

The reporting threshold configuration indicates a condition under which the terminal device sends a measurement report to the first access network device. In other words, the reporting threshold configuration indicates the condition under which the terminal device determines the measurement report based on a measurement result and sends the measurement report to the first access network device.

A filtering coefficient is used to filter cell signal strength currently measured by the terminal device and a cell measurement result determined by the terminal device during previous cell measurement, to determine a cell measurement result.

Step 3: The terminal device measures signal strength of the frequency or the cell based on the measurement configuration parameter, and determines the measurement result.

For example, the measurement configuration parameter indicates that cells that need to be measured include the cell A and the cell B.

The terminal device starts the physical (physical, PHY) layer to measure signal strength of the cell A based on frequency configuration or cell configuration information in the measurement configuration parameter, and the PHY layer of the terminal device sends the signal strength of the cell A to the RRC layer of the terminal device. The RRC layer of the terminal device determines a measurement result of the cell A based on the signal strength of the cell A, a previous measurement result of the cell A, and the filtering coefficient.

The terminal device starts the physical layer to measure signal strength of the cell B based on the frequency configuration or cell configuration information in the measurement configuration parameter, and the PHY layer of the terminal device sends the signal strength of the cell B to the RRC layer of the terminal device. The RRC layer of the terminal device determines a measurement result of the cell B based on the signal strength of the cell B, a previous measurement result of the cell B, and the filtering coefficient.

Specifically, for the cell A, the terminal device performs the following step 3.1 to step 3.3, to determine the measurement result of the cell A.

Step 3.1: The terminal device starts the physical (physical, PHY) layer to measure a reference signal of the cell A, so as to determine current signal strength of the cell A.

The signal strength of the cell A includes but is not limited to at least one of the following: a reference signal received power (reference signal received power, RSRP) value, a reference signal received quality (reference signal received quality, RSRQ) value, a signal to interference plus noise ratio (signal to interference plus noise ratio, SINR) value, and a received signal strength indicator (received signal strength indicator, RSSI).

Step 3.2: The terminal device determines the previous measurement result of the cell A.

The previous measurement result of the cell A is determined based on signal strength of the cell A previously determined by the terminal device and a filtering parameter. A specific implementation of determining the previous measurement result is similar to the method for determining the current measurement result of the cell A by the terminal device. Details are not described in this application again.

Step 3.3: The terminal device determines the measurement result of the cell A according to a formula 1 and based on the current signal strength of the cell A and the previous measurement result of the cell A.

It should be noted that, if the terminal device measures the signal strength of the cell A for the first time, the terminal device directly uses the measurement result in step 3.1 as the measurement result of the cell A, and does not need to determine a final measurement result according to the method recorded in step 3.1 to step 3.3.

For the cell B, the terminal device determines the measurement result of the cell B in a manner similar to step 3.1 to step 3.3.

Step 4: The terminal device determines the measurement report based on the measurement result.

Specifically, in step 3, the RRC layer of the terminal device determines a measurement result of each cell. The RRC layer of the terminal device evaluates the measurement result of each cell, and determines whether the current measurement results satisfy one of measurement events that need to be reported. If the current measurement result satisfies the one of the measurement events that need to be reported, the RRC layer of the terminal device generates a corresponding measurement report, and sends the measurement report to the first access network device.

In a possible implementation, the measurement report is used to report the measurement event to the access network device.

Example 1: The measurement events that need to be reported and that are determined by the terminal device include the following.

A1: A measurement result of a serving cell is greater than a threshold a₁.

A2: The measurement result of the serving cell is less than a threshold a₂.

A3: A measurement result of a neighboring cell is greater than the measurement result of the serving cell plus an offset (offset).

A4: The measurement result of the neighboring cell is greater than a threshold a₃.

A5: The measurement result of the serving cell is less than a threshold a₄ and the measurement result of the neighboring cell is greater than a threshold a₅.

A6: The measurement result of the neighboring cell is greater than a measurement result of an SCell plus the offset (offset).

B1: A measurement result of an inter-RAT cell is greater than a threshold a₆.

B2: The measurement result of the inter-RAT cell is greater than a threshold a₇ and a measurement result of an SpCell is less than a threshold a₈.

The serving cell is the cell A, and the neighboring cell is the cell B. The terminal device determines, based on the measurement results of the cell A and the cell B, whether the measurement results of the cell A and the cell B satisfy the measurement event that needs to be reported. If the measurement results of the cell A and the cell B satisfy a measurement event that needs to be reported, the terminal device generates a measurement report corresponding to the event.

It may be understood that the events that need to be reported may further include another type of event. This is not limited in this application.

It should be noted that the terminal device may determine, based on MeasIdList in a measurement configuration sent by the access network device, the measurement event that needs to be reported. MeasIdList is used to associate the frequency/cell information with the measurement event that needs to be reported and a measurement reporting condition.

For example, the measurement events that need to be reported by the terminal device include the A3 event. When the terminal device determines that the current measurement result satisfies the A3 event, the terminal device generates a measurement report corresponding to the A3 event.

It should be noted that the measurement report generated by the terminal device usually includes only one measurement event that needs to be reported. When there are a plurality of measurement events that need to be reported, and the terminal device determines that the current measurement result satisfies the plurality of measurement events that need to be reported, the terminal device generates a corresponding measurement report for each measurement event that needs to be reported, and sends the measurement reports to the access network device one by one.

Step 5: The terminal device sends the measurement report to the first access network device, and correspondingly, the terminal device receives the measurement report from the first access network device.

Step 6: The first access network device determines the second access network device based on the measurement report, and sends a handover request (Handover Request) to the second access network device. Correspondingly, the second access network device receives the handover request from the first access network device.

The second access network device is an access network device to which the terminal device needs to be handed over.

It should be noted that the first access network device is also referred to as the source base station, and corresponds to the cell A recorded in step 3. The second access network device is also referred to as the target base station, and corresponds to the cell B recorded in step 3.

Step 7: The second access network device sends handover request acknowledgment information (Handover Request ACK) to the first access network device. Correspondingly, the first access network device receives the handover request acknowledgment information from the second access network device.

In a possible implementation, after the second access network device receives the handover request from the first access network device, the second access network device determines a quantity of device connections, time-frequency resource allocation, a load, and the like of the second access network device. When the second access network device determines that the terminal device can be allowed to access the second access network device, the second access network device sends the handover request acknowledgment information to the first access network device.

In an example, the handover request acknowledgment information includes at least one of the following: a cell radio network temporary identifier (cell radio network temporary identifier, C-RNTI) and a security algorithm of the second access network device.

Step 8: The first access network device sends an RRC reconfiguration message to the terminal device. Correspondingly, the terminal device receives the RRC reconfiguration message from the first access network device.

The RRC reconfiguration message includes the handover request acknowledgment information sent by the second access network device to the first access network device. In other words, in step 8, the first access network device may send, to the terminal device in a transparent transmission mode, the handover request acknowledgment information sent by the second access network device to the first access network device.

In a possible implementation, when at least one of the first access network device and the second access network device is an access network device in an NR system, the RRC reconfiguration message includes at least one of the following: related information of the second access network device and a configuration parameter required by the terminal device to access the second access network device.

Specifically, the RRC reconfiguration message includes at least one of the following: a physical cell identifier (physical cell identifier, PCI) of the cell B, frequency information of the cell B (for example, a frequency of the cell B or other frequency information), a C-RNTI allocated by the cell B to the terminal device, and random access channel (random access channel, RACH) resource information (for example, a dedicated RACH resource and/or a common RACH resource) required for accessing the cell B.

Step 9: The terminal device initiates random access to the second access network device.

It should be noted that, when the terminal device currently initiates random access to the second access network device, the terminal device needs to disconnect from the first access network device. Before the terminal device successfully accesses the second access network device, transmission of data transmitted by the terminal device is temporarily interrupted.

Step 10: After random access succeeds, the terminal device sends RRC reconfiguration completion information to the second access network device.

According to step 1 to step 10, the terminal device can complete cell measurement and cell handover.

In a current cell handover scenario, there is a scenario in which the first access network device supports a multicast and broadcast transmission mode, and the second access network device does not support the multicast and broadcast transmission mode.

In this scenario, if the MBS is being transmitted between the terminal device and the first access network device, after the terminal device is handed over to the second access network device, because the second access network device does not support the multicast and broadcast transmission mode, the terminal device cannot continue to receive the MBS from the second access network device in the multicast and broadcast transmission mode. Consequently, service continuity of the MBS cannot be ensured.

To resolve the foregoing technical problem, this application provides a communication method, to ensure service continuity of the MBS when the terminal device is handed over from the first access network device that supports the multicast and broadcast transmission mode to the second access network device that does not support the multicast and broadcast transmission mode.

The method includes: After the first access network device receives the measurement report of the terminal device, the first access network device determines whether the second access network device supports the multicast and broadcast transmission mode. When the second access network device does not support the multicast and broadcast transmission mode, the first access network device indicates the terminal device to configure, as a second radio bearer for carrying a unicast service, a first radio bearer for carrying an MBS. Correspondingly, the terminal device configures the first radio bearer as the second radio bearer. Then, the MBS is transmitted between the terminal device and the first access network device through the second radio bearer.

In this way, the MBS is transmitted between the terminal device and the first access network device in a unicast mode. Therefore, in a process in which the terminal device is subsequently handed over to the second access network device, the first access network device and the second access network device directly switch an MBS, that is being transmitted, to the second access network device in a current unicast service switching manner. This resolves a disruption of the MBS caused because the second access network device does not support the multicast and broadcast transmission mode.

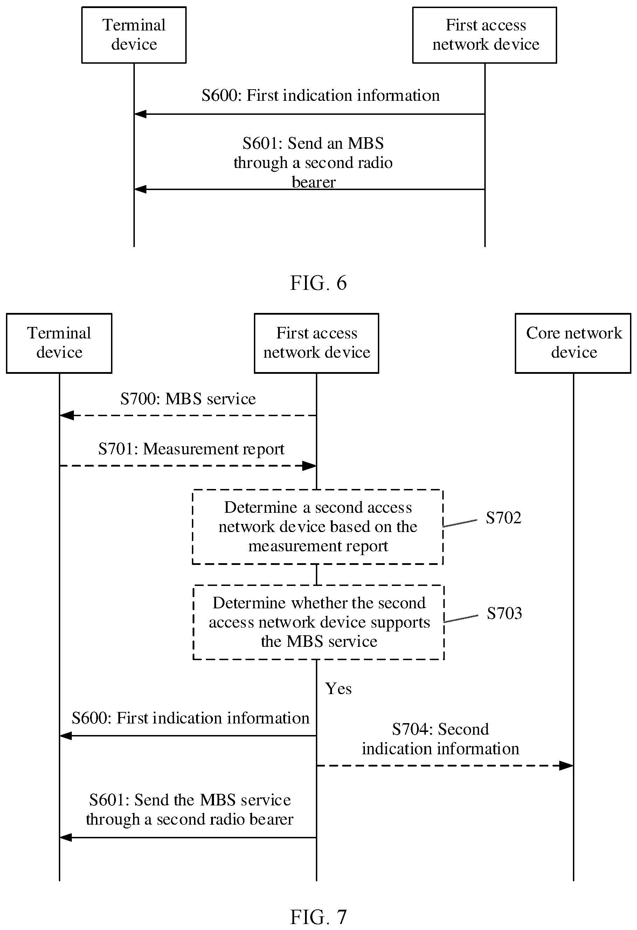

The communication method provided in this embodiment of this application is applied to the communication system shown in FIG. 2. As shown in FIG. 6, the communication method includes the following steps.

S600: The first access network device sends first indication information to the terminal device. Correspondingly, the terminal device receives the first indication information from the first access network device.

The first indication information indicates the terminal device to configure the first radio bearer as the second radio bearer. The first radio bearer is a multicast radio bearer, and the second radio bearer is a unicast radio bearer.

It should be noted that the first access network device is an access network device that supports the multicast and broadcast transmission mode. Before sending the first indication information, the first access network device receives the measurement report from the terminal device. The measurement report is used to trigger the first access network device to hand over the terminal device to the second access network device. The second access network device is an access network device that does not support the multicast and broadcast transmission mode.

In a possible implementation, the first indication information specifically indicates at least one of the following information of the second radio bearer: PDCP configuration information, RLC configuration information, security configuration information, and an identifier of the second radio bearer.

The terminal device may determine, based on the fact that the identifier of the second radio bearer is the same as an identifier of the first radio bearer, that the second radio bearer configured this time is configured based on the first radio bearer.

In another possible implementation, the second radio bearer still uses at least one of the following configuration information of the first radio bearer: PDCP configuration information and PTP RLC configuration information. A PDCP entity corresponding to the second radio bearer still uses a transmission status and a transmission parameter that are of a transmission window of a PDCP entity corresponding to the first radio bearer. The transmission status and the transmission parameter of the transmission window include at least one of the following: a currently sent data packet with a largest SN, a successfully sent data packet, an unsuccessfully sent data packet, a size of the transmission window, a running status of a timer related to the transmission window, and the like.

Specifically, when the second radio bearer still uses the at least one of the PDCP configuration information and the PTP RLC configuration information of the first radio bearer, the first indication information includes a first identifier. The first identifier indicates the terminal device to still use the at least one of the PDCP configuration information and the PTP RLC configuration information.

For example, the first indication information includes two bits, which respectively indicate whether to still use the PDCP configuration information and/or the PTP RLC configuration information of the first radio bearer. When a value of the bit is 0, it indicates to still use the PDCP configuration information and/or the PTP RLC configuration information of the first radio bearer. When a value of the bit is 1, it indicates not to still use the PDCP configuration information and/or the PTP RLC configuration information of the first radio bearer.

In an example, when values of the two bits are "00", the first indication information indicates the terminal device not to still use both the PDCP configuration information of the first radio bearer and the PTP RLC configuration information of the first radio bearer.

When values of the two bits are "01", the first indication information indicates the terminal device not to still use the PDCP configuration information of the first radio bearer, but to still use the PTP RLC configuration information of the first radio bearer.

When values of the two bits are "10", the first indication information indicates the terminal device to still use the PDCP configuration information of the first radio bearer, and not to still use the PTP RLC configuration information of the first radio bearer.

When values of the two bits are "11", the first indication information indicates the terminal device to still use both the PDCP configuration information of the first radio bearer and the PTP RLC configuration information of the first radio bearer.

For another example, the first indication information indicates that a current configuration is a special type of configuration, and it is agreed in a protocol that, after receiving the type of configuration, the terminal device still uses at least one of PDCP configuration information and PTP RLC configuration information of a previous radio bearer.

S601: The first access network device sends the MBS to the terminal device through the second radio bearer. Correspondingly, the terminal device receives the MBS sent by the first access network device through the second radio bearer.

In a possible implementation, the first radio bearer is an MBS radio bearer (MBS radio bearer, MRB). The second radio bearer is a data radio bearer (data radio bearer, DRB). The following uses an example in which the first radio bearer is an MRB and the second radio bearer is a DRB for description.

After S601, the terminal device, the first access network device, and the second access network device may perform cell handover according to the solution recorded in step 6 to step 10 in FIG. 5. After being handed over to the second access network device, the terminal device transmits the MBS in the unicast mode.

According to the foregoing technical solution, when the terminal device needs to be handed over from the first access network device that supports the multicast and broadcast transmission mode to the second access network device that does not support the multicast and broadcast transmission mode, the first access network device configures, as the second radio bearer used to carry the unicast service, the first radio bearer that is currently used to carry the MBS between the first access network device and the terminal device. The first access network device sends the MBS to the terminal device in the unicast mode through the second radio bearer.

In this way, the MBS is transmitted between the terminal device and the first access network device in the unicast mode. Therefore, in the process in which the terminal device is subsequently handed over to the second access network device, the first access network device and the second access network device directly switch the MBS, that is being transmitted, to the second access network device in the current unicast service switching manner. This resolves the disruption of the MBS caused because the second access network device does not support the multicast and broadcast transmission mode.

In a possible implementation, with reference to FIG. 6, as shown in FIG. 7, before S600, the method provided in this embodiment of this application further includes the following S700 to S703. The following provides specific descriptions.

S700: The core network device sends the MBS to the first access network device. Correspondingly, the first access network device receives the MBS from the core network device.

Specifically, after the terminal device accesses the first access network device, if the MBS needs to be transmitted between the terminal device and the first access network device, before the MBS is transmitted, the core network device initiates an MBS session (MBS session) or an MBS flow establishment/modification request, so that a transmission channel used to transmit the MBS is established between the core network device and the first access network device. The core network device transmits the MBS to the first access network device through the established transmission channel.

The first radio bearer (MRB) is established between the first access network device and the terminal device, and the MBS is transmitted between the first access network device and the terminal device through the first radio bearer.

S701: The terminal device sends the measurement report to the first access network device.

It should be noted that, in this embodiment of this application, before triggering the terminal device to perform cell handover, the first access network device first needs to indicate the terminal device to configure the first radio bearer as the second radio bearer, and transmit the MBS through the second radio bearer. Therefore, duration required by the terminal device to perform cell handover increases. To avoid a terminal device handover failure or long service interruption duration caused by excessively long duration for performing cell handover by the terminal device, this application further provides a method that can trigger the terminal device to report the measurement report in advance, so that the terminal device has sufficient duration to perform cell handover.

In a possible implementation, the terminal device may trigger and report the measurement report by using a new measurement event. The new measurement event is used to enable the terminal device to trigger and report the measurement report in advance.

In an example, with reference to Example 1, the new measurement event includes at least one of the following.

E1: The measurement result of the serving cell is greater than a threshold b₁.

E2: The measurement result of the serving cell is less than a threshold b₂.

E3: The measurement result of the neighboring cell plus c is greater than the measurement result of the serving cell plus the offset (offset).

E4: The measurement result of the neighboring cell is greater than a threshold b₃.

E5: The measurement result of the serving cell is less than a threshold b₄ and the measurement result of the neighboring cell is greater than a threshold b₅.

E6: The measurement result of the neighboring cell plus d is greater than the measurement result of the SCell plus the offset (offset).

F1: The measurement result of the inter-RAT cell is greater than a threshold b₆.

F2: The measurement result of the inter-RAT cell is greater than a threshold b₇ and the measurement result of the SpCell is less than a threshold b₈.

a₁ is greater than b₁, a₂ is less than b₂, a₃ is greater than b₃, a₄ is less than b₄, a₅ is greater than b₅, a₆ is greater than b₆, a₇ is greater than b₇, as is less than b₈, and both c and d are greater than 0.

Based on the new measurement event, the terminal device can trigger and report the measurement report in advance, so that the terminal device has sufficient duration to configure the first radio bearer as the second radio bearer and perform cell handover. This reduces a probability of the terminal device handover failure or service interruption duration.

Introduction of the new measurement event is optional. Alternatively, the terminal device may trigger and report the measurement report based on an existing measurement event configured for a handover, and the first access network device may determine, based on an existing measurement mechanism and whether the target base station supports the multicast and broadcast sending mode, whether to first configure the MRB as the DRB before performing handover.

S702: The first access network device determines the second access network device based on the measurement report.

S703: The first access network device determines whether the second access network device supports the multicast and broadcast transmission mode.

In a possible implementation, a method for determining, by the first access network device, whether the first access network device supports the multicast and broadcast transmission mode includes at least the following three manners. Manner 1: The first access network device determines, by performing signaling interaction with the second access network device, whether the second access network device supports the multicast and broadcast transmission mode. Manner 2: The first access network device determines, through an operation administration and maintenance (operation administration and maintenance, OAM) system, whether the second access network device supports the multicast and broadcast transmission mode. Manner 3: The first access network device determines, based on a historical handover record, whether the second access network device supports the multicast and broadcast transmission mode.

The following separately describes Manner 1, Manner 2, and Manner 3 in detail.

Manner 1: The first access network device determines, by performing signaling interaction with the second access network device, whether the second access network device supports the multicast and broadcast transmission mode.

In a possible implementation, Manner 1 may be implemented in the following step a to step c.

Step a: The first access network device sends request information to the second access network device. Correspondingly, the second access network device receives the request information from the first access network device.

The request information requests to query whether the second access network device supports the multicast and broadcast transmission mode.

Step b: The second access network device sends response information to the first access network device. Correspondingly, the first access network device receives the response information from the second access network device.

The response information indicates whether the second access network device supports the multicast and broadcast transmission mode.

In an example, one bit in the response information indicates whether the second access network device supports the multicast and broadcast transmission mode.

When a value of the bit is "0", the response information indicates that the second access network device does not support the multicast and broadcast transmission mode.

When a value of the bit is "1", the response information indicates that the second access network device supports the multicast and broadcast transmission mode.

Step c: The first access network device determines, based on the response information, whether the second access network device supports the multicast and broadcast transmission mode.

With reference to the foregoing example, the first access network device determines, based on the value of the bit in the response information, whether the second access network device supports the multicast and broadcast transmission mode.

Manner 2: The first access network device determines, through the OAM system, whether the second access network device supports the multicast and broadcast transmission mode.

The OAM system is an OAM system to which the second access network device belongs, and the OAM system stores configuration information of the second access network device.

Manner 3: The first access network device determines, based on the historical handover record, whether the second access network device supports the multicast and broadcast transmission mode.

Specifically, when the terminal device is handed over from the first access network device to the second access network device for the first time, the first access network device may determine, in the manner recorded in Manner 1 or Manner 2, whether the second access network device supports the multicast and broadcast transmission mode. Then, the first access network device stores the historical handover record. The historical handover record can represent information about whether the second access network device supports the multicast and broadcast transmission mode.

During a next handover, the first access network device determines, based on the stored historical handover record, whether the second access network device supports the multicast and broadcast transmission mode.

It should be noted that, after S703, if the first access network device determines that the second access network device does not support the multicast and broadcast transmission mode, the first access network device and the terminal device perform S600 and S601.

If the first access network device determines that the second access network device supports the multicast and broadcast transmission mode, the first access network device, the second access network device, and the terminal device directly perform cell handover according to step 6 to step 10 recorded in FIG. 5.

In a possible implementation, after S600, if the terminal device configures the first radio bearer as the second radio bearer, a session between the first access network device and the core network device may be switched from the original MBS session into a unicast session (Case 1), or the MBS session is still maintained between the first access network device and the core network device (Case 2).

The following separately describes Case 1 and Case 2 in detail.

Case 1: The MBS session between the first access network device and the core network device is switched to the unicast session, and the MBS is transmitted between the first access network device and the core network device through the unicast session.

As shown in FIG. 7, in Case 1, after S600, the method further includes S704.

S704: The first access network device sends second indication information to the core network device. Correspondingly, the core network device receives the second indication information from the first access network.

The second indication information indicates the core network device to send the MBS to the first access network device through a unicast session or unicast quality of service flow corresponding to the terminal device.

In a possible implementation, the second indication information further indicates a data packet serial number. The data packet serial number is a data packet serial number of a 1^{st} data packet of the MBS sent by the core network device through the unicast session or the unicast quality of service flow.

The data packet serial number may be a general packet radio service tunneling protocol-user plane (GPRS Tunnelling Protocol-U, GTP-U) serial number (Serial Number, SN) or a QoS flow identifier (QoS Flow ID, QFI) SN of the data packet.

Case 2: The MBS session is still maintained between the first access network device and the core network device to transmit the MBS.

In Case 2, after receiving the MBS transmitted by the core network device through the MBS session, the first access network device maps data of the MBS to the second radio bearer for transmission.

In a possible implementation, after the terminal device receives the first indication information, the terminal device configures the first radio bearer as the second radio bearer. The following describes in detail a process in which the terminal device configures the first radio bearer as the second radio bearer. The first indication information may be an RRC message sent by the first access network device to the terminal device. The RRC message indicates the terminal device to reconfigure the MRB as the DRB.

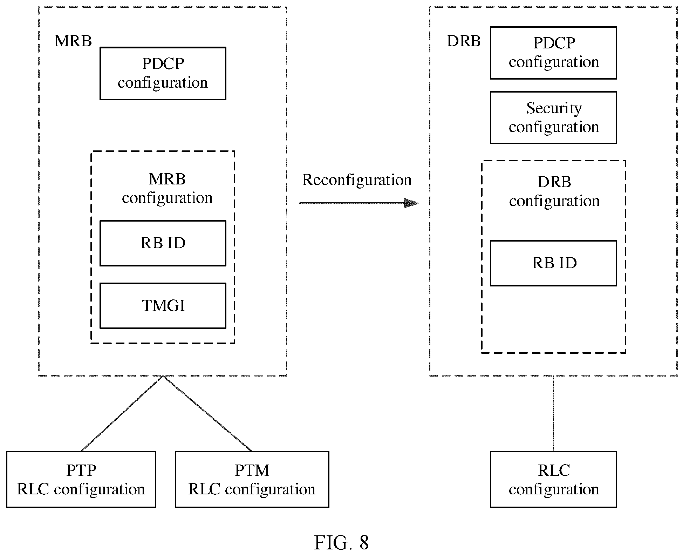

With reference to FIG. 8, the MRB before reconfiguration includes at least one of the following: a PDCP configuration, a service identifier, and a radio bearer identifier. In addition, an MRB configuration is associated with a PTP RLC configuration and a PTM RLC configuration, and is separately used for PTP transmission and PTM transmission of a data packet.

The DRB after reconfiguration includes at least one of the following: a PDCP configuration, a security configuration, a radio bearer identifier, and an associated PTP RLC configuration.

It can be learned that, in the process of configuring the MRB as the DRB, the terminal device deletes a temporary multicast group identity (temporary multicast Group Identifier, TMGI) in the MRB configuration, and adds the security configuration to the MRB. The radio bearer identifier of the DRB after reconfiguration is the same as that of the MRB before reconfiguration.

Correspondingly, the first indication information includes at least one of the following information: PDCP configuration information, RLC configuration information, security configuration information, and identifier information of the DRB. The following separately provides detailed descriptions.
(a). The PDCP configuration information is used to configure a PDCP of the DRB. The first indication information may include the PDCP configuration information, or may not include the PDCP configuration information.

When the first indication information does not include the PDCP configuration information, the terminal device determines to still use the PDCP configuration in the MRB as the PDCP configuration of the DRB. In this case, the terminal device determines to reserve the PDCP configuration in the MRB as the PDCP configuration of the DRB.

When the first indication information includes the PDCP configuration information, the terminal device configures the PDCP configuration of the DRB based on the PDCP configuration information. In this case, the terminal device releases the PDCP configuration in the MRB, and performs PDCP configuration based on the PDCP configuration information in the first indication information.

(b). The RLC configuration information indicates configuration information of RLC associated with the DRB. The first indication information may include the RLC configuration information, or may not include the RLC configuration information.

When the first indication information does not include the RLC configuration information, the terminal device determines to still use PTP RLC in the MRB as the RLC configuration of the DRB. In this case, the terminal device determines to reserve the PTP RLC in the MRB as the RLC configuration of the DRB.

When the first indication information includes the RLC configuration information, the terminal device configures the RLC configuration of the DRB based on the RLC configuration information in the first indication information. In this case, the terminal device releases the RLC configuration in the MRB, and configures the RLC configuration of the DRB based on the RLC configuration information in the first indication information.

(c). The security configuration information is used to configure a security configuration of the DRB. In a process of transmitting the data packet, the PDCP entity performs security processing on the data packet based on the security configuration, to improve data security.

(d). The identifier of the DRB indicates an identifier of the DRB after configuration.

It should be noted that, after the terminal device configures the MRB as the DRB, to avoid a loss of a data packet of an MRB service, the first access network device determines that the PDCP entity corresponding to the second radio bearer still uses the transmission status and the transmission parameter of the transmission window of the PDCP entity corresponding to the first radio bearer.

Specifically, after the first access network device determines that the terminal device configures the MRB as the DRB, the first access network device and the terminal device do not re-establish a new PDCP entity, but still use a PDCP entity corresponding to the MRB for the DRB. In addition, the first access network device and the terminal device do not initialize or reset a transmission status and a transmission parameter of a transmission window of the PDCP entity corresponding to the MRB.

It should be noted that, after the first access network device determines that the terminal device configures the MRB as the DRB, the first access network device and the terminal device may alternatively re-establish a PDCP entity. In this case, a transmission status and a transmission parameter of a transmission window of the reestablished PDCP entity need to be initialized or reset.

In this case, to reduce the loss of the data packet, the first access network device needs to perform redundant transmission.

For example, before the MRB is configured as the DRB, if the first access network device determines that the first access network device transmits a data packet #10 to the terminal device, after the MRB is configured as the DRB, the first access network device starts transmission from a data packet (for example, a data packet #5) before the data packet #10, to reduce the loss of the data packet.

According to the foregoing technical solution, an embodiment of this application provides a method for configuring, by the terminal device, the MRD as the DRB before the terminal device performs cell handover, and then transmitting the MBS between the first access network device and the terminal device in the unicast mode. Then, the terminal device may perform cell handover according to an existing handover procedure. In this case, the MBS is sent in the unicast mode. Therefore, after the MBS is switched to the second access network device, the MBS can still be transmitted in the unicast mode. This avoids a problem that service continuity of the MBS cannot be ensured after cell handover.

In addition, an embodiment of this application further provides a communication method, to transmit an MBS between a first access network device and a terminal device in a multicast mode before handover. After handover, the MBS is transmitted between the terminal device and a second access network device in a unicast mode. The first access network device sends an unsent MBS to the second access network device in the unicast mode.

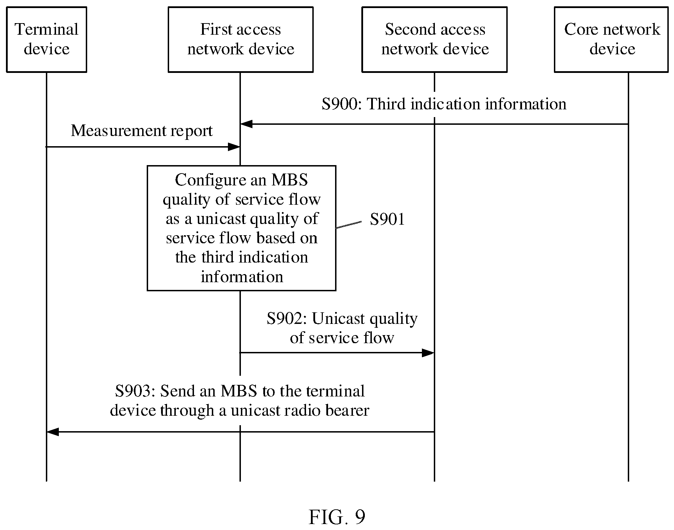

As shown in FIG. 9, the communication method includes S900 to S903. The following provides detailed descriptions.

S900: The first access network device receives third indication information.

The third indication information indicates an association relationship between a unicast quality of service flow and an MBS quality of service flow.

The third indication information may be carried in MBS context information sent by a core network device to the first access network device. For example, when an MBS session or an MBS flow is established, the core network device sends the third indication information to the first access network device by using the MBS context information.

The third indication information includes at least one of the following: a flow identifier of the unicast quality of service flow corresponding to the MBS quality of service flow, and a QoS parameter of the unicast quality of service flow.

The flow identifier of the unicast quality of service flow may be represented through an identifier of a PDU session of the unicast quality of service flow or an identifier of the flow identifier of the unicast quality of service flow.

In a possible implementation, the third indication information is indication information sent by the core network device to the second access network device. A time point at which the core network device sends the third indication information to the first access network device may be before the terminal device sends a measurement report to the first access network device, or may be after the terminal device sends a measurement report to the first access network device, or may be the same as a time point at which the terminal device sends a measurement report to the first access network device. This is not limited in this application.

In another possible implementation, the third indication information further indicates an association relationship between the MBS session and a unicast session. This is not limited in this application.

S901: The first access network device maps the MBS quality of service flow to the unicast quality of service flow in a handover process based on the third indication information.

S902: The first access network device forwards the unicast quality of service flow to the second access network device.

Specifically, a data transmission channel is established between the first access network device and the second access network device. Because the second access network device does not support a multicast and broadcast transmission mode, the MBS quality of service flow cannot be identified. Therefore, the first access network device maps the MBS quality of service flow to the unicast quality of service flow. Then, the first access network device transmits the unicast quality of service flow to the second access network device through the established data transmission channel.

S903: The second access network device sends the MBS to the terminal device through a unicast radio bearer.

It should be noted that the unicast radio bearer between the second access network device and the terminal device is a unicast radio bearer established in a handover process.

When the second access network device sends the MBS to the terminal device, the generated identifier of the unicast quality of service flow may also be determined based on the association relationship indicated by the third indication information. Details are not described herein again.

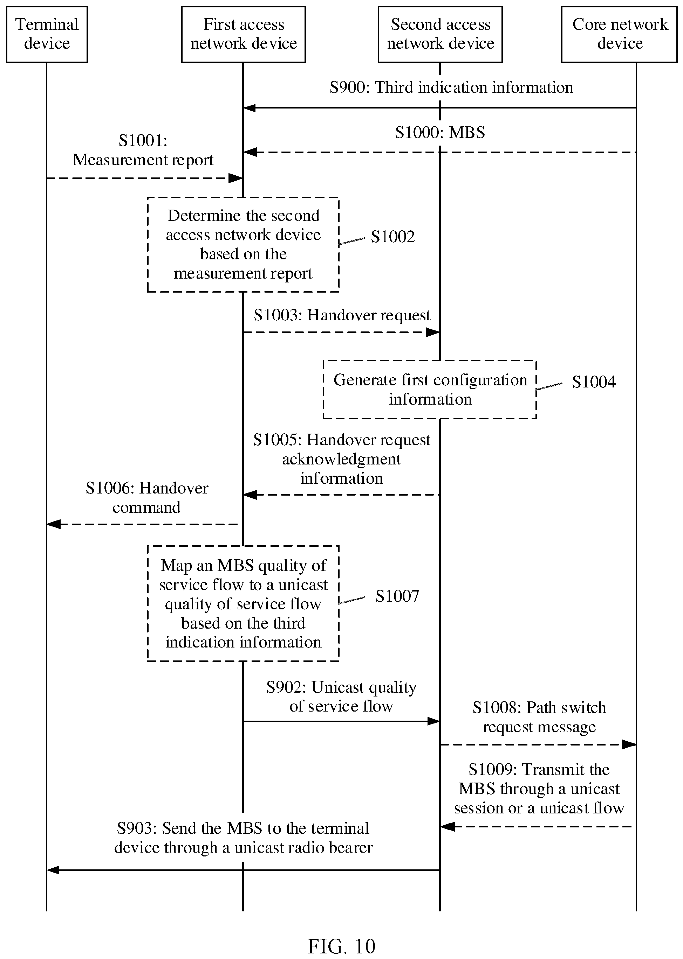

With reference to FIG. 9, as shown in FIG. 10, S901 may be specifically implemented in S1000 to S1007.

S1000: The core network device sends the MBS to the first access network device. Correspondingly, the first access network device receives the MBS from the core network device. It should be noted that a specific implementation of S1000 is similar to that of S700. Details are not described again in this application.

S1001: The terminal device sends the measurement report to the first access network device.

It should be noted that a specific implementation of S1001 is similar to that of S701. Details are not described again in this application.

S1002: The first access network device determines the second access network device based on the measurement report.

It should be noted that a specific implementation of S1002 is similar to that of S702. Details are not described again in this application.

S1003: The first access network device sends a handover request (Handover Request) to the second access network device. Correspondingly, the second access network device receives the handover request from the first access network device.

The handover request may include related information of the MBS.

In an example, the handover request includes the MBS context information (MBS info).

S1004: The second access network device generates first configuration information.

The first configuration information indicates the terminal device to perform configuration based on configuration information of the second access network.

In a possible implementation, the first configuration information includes all configuration information used by the second access network device for cell handover and data transmission with the terminal device.

Specifically, after the second access network device receives the handover request from the first access network device, because the second access network device does not support the multicast and broadcast transmission mode, the second access network device cannot identify the MBS information in the handover request.

In this case, the second access network device determines that configuration information between the first access network and the terminal device includes configuration information that cannot be identified by the second access network device. To enable the terminal device to perform configuration based on the configuration information of the second access network device, the second access network device generates the first configuration information, so that the terminal device can perform configuration based on the first configuration information.

In an example, the first configuration information may be full-config (full configuration), and indicates the terminal device to perform configuration fully based on the configuration information of the second access network device instead of performing delta config (incremental configuration) based on the configuration information of the second access network device.

S1005: The second access network device sends handover request acknowledgment information (Handover Request ACK) to the first access network device. Correspondingly, the first access network device receives the handover request acknowledgment information from the second access network device.

The handover request acknowledgment information includes the first configuration information.

S1006: The first access network device sends a handover command (Handover command) to the terminal device. Correspondingly, the terminal device receives the handover command from the first access network device.

The handover command includes the first configuration information.

After the terminal device receives the handover command, the terminal device identifies the first configuration information in the handover command. The terminal device performs configuration based on the configuration information of the second access network device written to the first configuration information, and is handed over to the second access network device.

It should be noted that, in a process in which the terminal device performs configuration based on the configuration information of the second access network device, the terminal device establishes the unicast radio bearer between the terminal device and the second access network device, so that the second access network device subsequently transmits data to the terminal device through the unicast radio bearer.

S1007: The first access network device maps the MBS quality of service flow to the unicast quality of service flow based on the third indication information.

Specifically, the first access network device maps the MBS quality of service flow to the unicast quality of service flow based on the correspondence that is between the MBS quality of service flow and the unicast quality of service flow and that is indicated by the third indication information.

In a possible implementation, the third indication information indicates a mapping relationship between the MBS quality of service flow and the identifier of the unicast quality of service flow.

After the first access network device determines the identifier of the unicast quality of service flow corresponding to the MBS quality of service flow, the first access network device replaces a flow identifier in a data packet header of the MBS quality of service flow with the flow identifier of the corresponding unicast quality of service flow, to obtain the unicast quality of service flow. The first access network device sends the unicast quality of service flow to the second access network device through the established data transmission channel.

As shown in FIG. 10, after S902, the method further includes the following steps.

S1008: The second access network device sends a path switch request message (Path switch request) to the core network device.

The path switch request requests the core network device to switch a transmission path of the MBS from the first access network device to the second access network device.

The path switch request does not include the related information of the MBS.

S1009: The core network device transmits the MBS to the second access network device through the unicast session or the unicast quality of service flow.

Specifically, after receiving the path switch request, the core network device determines that a path requested to be switched is the transmission path of the MBS, and the path switch request does not include the related information of the MBS.

As a result, the core network device determines that the second access network device does not support the multicast and broadcast transmission mode. The core network device sends a data packet of the MBS to the second access network device in a form of the unicast session or the unicast quality of service flow.

According to the foregoing technical solution, before the terminal device is handed over to the second access network device, the first access network device and the terminal device keep transmitting the MBS in the multicast mode. In a process in which the terminal device performs cell handover, the first access network device indicates the terminal device to transmit the MBS with the second access network in the unicast mode. After handover, the MBS is transmitted between the terminal device and the second access network device in the unicast mode. The first access network device sends the unsent MBS to the second access network device in the unicast mode.

In this way, it can be ensured that the terminal device transmits the MBS in the unicast mode after being handed over to the second access network device. According to the method, it is ensured that the terminal device can still correctly transmit the MBS after being handed over to the second access network device. In addition, the handover procedure is similar to an existing handover procedure, is easy to implement, and can ensure continuity of receiving the MBS by the terminal device.

The foregoing records two methods for sending, by the second access network device after handover is completed, the MBS to the terminal device in the unicast mode when the terminal device is handed over from the first access network device that supports the multicast and broadcast transmission mode to the second access network device that does not support the multicast and broadcast transmission mode.

In this scenario, the MBS is transmitted between the second access network device and the terminal device in the unicast mode. In this case, if the terminal device performs cell handover again, and is handed over from the second access network device to a third access network device that supports the multicast and broadcast transmission mode, after handover is performed according to the existing handover procedure, the MBS is still transmitted between the third access network device and the terminal device in the unicast mode.

This may cause waste of a transmission resource between the third access network device and the terminal device. For example, the third access network device is transmitting an MBS to another terminal in the multicast mode. If the third access network device still transmits the MBS to the terminal device in the unicast mode, the third access network device repeatedly sends the MBS, resulting in waste of a transmission resource of the third access network.

Therefore, an embodiment of this application further provides the following method, to resolve transmission resource waste caused by repeated transmission of an MBS when a terminal device is handed over from an access network device that does not support a multicast and broadcast transmission mode to an access network device that supports the multicast and broadcast transmission mode.

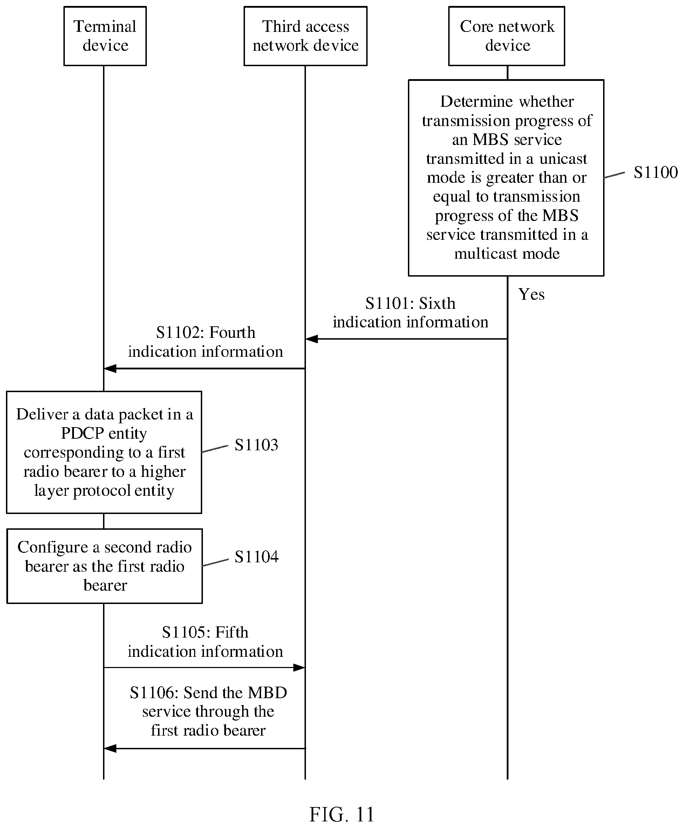

As shown in FIG. 11, the method includes the following steps.

S1100: A core network device determines whether transmission progress of the MBS transmitted in a unicast mode is greater than or equal to transmission progress of the MBS transmitted in a multicast mode.

Specifically, before handover, the MBS is transmitted between the access network device that does not support the multicast and broadcast transmission mode and the terminal device in the unicast mode. After handover, the MBS is still transmitted between the terminal device and a third access network device in the unicast mode.

In this case, the core network device determines whether the third access network device supports the multicast and broadcast transmission mode.

If yes, the core network device determines whether the third access network device is currently transmitting the MBS in the multicast mode.

If yes, the core network device determines the transmission progress of the MBS transmitted in the unicast mode and the transmission progress of the MBS transmitted in the multicast mode.

The core network device determines whether the transmission progress of the MBS transmitted in the unicast mode is greater than or equal to the transmission progress of the MBS transmitted in the multicast mode.

S1101: If yes, the core network device sends sixth indication information to the third access network device. Correspondingly, the third access network device receives the sixth indication information from the core network device.

The sixth indication information indicates the third access network device to configure a unicast session as a multicast session.

In an example, the sixth indication information is session modification information.

In a possible implementation, the core network device determines an identifier of a data packet of the MBS currently transmitted in the unicast mode and an identifier of a data packet of the MBS currently transmitted in the multicast mode. If the identifier of the data packet of the MBS currently transmitted in the unicast mode is greater than or equal to the identifier of the data packet of the MBS currently transmitted in the multicast mode,
for example, if the core network device determines that the identifier of the data packet of the MBS currently transmitted in the unicast mode is a data packet #9, and the identifier of the data packet of the MBS currently transmitted in the unicast mode is a data packet #7, the transmission progress of the MBS transmitted in the unicast mode is greater than the transmission progress of the MBS transmitted in the multicast mode, and the core network device sends the sixth indication information to the third access network device.

If the core network device determines that the identifier of the data packet of the MBS currently transmitted in the unicast mode is a data packet #9, and the identifier of the data packet of the MBS currently transmitted in the unicast mode is a data packet #11, the transmission progress of the MBS transmitted in the unicast mode is less than the transmission progress of the MBS transmitted in the multicast mode.

If the core network device sends the sixth indication information to the third access network device at this time, the third access network device may directly associate the MBS transmitted in the unicast mode with the MBS transmitted in the multicast mode. A data packet #10 of the MBS transmitted by the third access network device in the unicast mode is not sent, but the data packet #10 of the MBS transmitted by the third access network device in the multicast mode is sent. In this case, if the MBS is directly associated with the MBS transmitted in the multicast mode, the terminal device cannot receive the data packet #10.

Therefore, in this case, the core network device does not send the sixth indication information to the third access network device. The core network device may suspend the MBS transmitted in the multicast mode until the transmission progress of the MBS transmitted in the unicast mode is greater than or equal to the transmission progress of the MBS transmitted in the multicast mode.

S1102: The third access network device sends fourth indication information to the terminal device. Correspondingly, the terminal device receives the fourth indication information from the third access network device.

The fourth indication information indicates the terminal device to configure a second radio bearer as a first radio bearer. The first radio bearer is a multicast radio bearer, and the second radio bearer is a unicast radio bearer.

S1103: The terminal device delivers a data packet in a PDCP entity corresponding to the first radio bearer to a higher layer protocol entity.

The higher layer protocol entity is a protocol layer at which data transmitted by the PDCP entity is received, for example, a transmission control protocol/internet protocol (transmission control protocol/internet protocol, TCP/IP) layer, an application layer, or a user datagram protocol (user datagram protocol, UDP) layer. This is not limited in this application.

In a possible implementation, the terminal device delivers all received data packets in the PDCP entity corresponding to the first radio bearer to the higher layer protocol entity.

In another possible implementation, the terminal device sequentially delivers data packets that are consecutively received in the PDCP entity corresponding to the first radio bearer to the higher layer protocol entity. The terminal device deletes another data packet, for example, a data packet after a receiving hole. The hole is a serial number corresponding to a data packet that is not received. For example, if the PDCP entity includes a data packet #1, a data packet #2, and a data packet #4, a serial number corresponding to a data packet #3 is denoted as a data packet of the hole.

In an example, if the PDCP entity corresponding to the first radio bearer of the terminal device includes the data packet #1, the data packet #2, and the data packet #4, the terminal device delivers the data packet #1 and the data packet #2 to the higher layer protocol entity, and the terminal device deletes the data packet #4. The data packet #3 corresponds to the receive hole.

S1104: The terminal device performs at least one of the following operations to configure the second radio bearer as the first radio bearer:
establishing a PTM RLC entity, configuring an MBS identifier, and deleting a security configuration in a second radio bearer configuration.

Specifically, a process in which the terminal device configures the second radio bearer as the first radio bearer is opposite to the process in which the terminal device configures the first radio bearer as the second radio bearer. For a specific implementation, refer to the foregoing process of configuring the first radio bearer as the second radio bearer shown in FIG. 8. Details are not described herein again.

It should be noted that, in the process of configuring the second radio bearer as the first radio bearer, after the second radio bearer is configured as the first radio bearer, the third access network device performs MBS transmission based on a previous case in which the MBS is transmitted through the first radio bearer. Therefore, a transmission status and a transmission parameter of a transmission window of a PDCP entity of the second radio bearer need to be reconfigured based on a transmission status and a transmission parameter of a transmission window of the PDCP entity of the first radio bearer for transmitting the MBS need to be configured.

S1105: The terminal device sends fifth indication information to the third access network device. Correspondingly, the third access network device sends the fifth indication information to the terminal device.

The fifth indication information indicates a serial number corresponding to a data packet that is unsuccessfully received by the terminal device.

Specifically, when the terminal device delivers all the data packets in the PDCP entity corresponding to the first radio bearer to the higher layer protocol entity, the fifth indication information indicates all data packets that are not received by the terminal device.

When the terminal device sequentially delivers the data packets consecutively received in the PDCP entity corresponding to the first radio bearer to the higher layer protocol entity, and the terminal device deletes the another data packet, for example, the data packet after the receive hole, the terminal device reports a serial number corresponding to the receive hole or a serial number of a 1^{st} data packet after the receive hole, to indicate the third access network device to perform transmission from the data packet.

For example, with reference to the example in S1103, the terminal device reports the serial number of the data packet #3. After receiving the serial number of the data packet #3, the third access network device starts transmission from the data packet #3.

It should be noted that the fifth indication information may indicate the serial number of the data packet in a form of a bitmap, or may directly indicate the serial number of the data packet. This is not limited in this application.

S1106: The third access network device sends the MBD service to the terminal device through the first radio bearer. Correspondingly, the terminal device receives the MBD service from the third access network device through the first radio bearer.

It should be noted that, in this application, an example in which the terminal device is handed over from the second access network device to the third access network device is used for description. In an actual process, the method is applicable to a scenario in which the terminal device is handed over to the access network device that supports the multicast and broadcast transmission mode when the MBS is being transmitted between the terminal device and the access network device in the unicast mode. This is not limited in this application.

According to the foregoing technical solution, the embodiment of this application provides the communication method. When the terminal device is handed over from the access network device that does not support the multicast and broadcast transmission mode to the access network device that supports the multicast and broadcast transmission mode, if the MBS is transmitted between the terminal device and the access network device in the unicast mode, the MBS is mapped to the MBS transmitted in the multicast mode. This resolves transmission resource waste caused by repeated transmission of the MBS.

The foregoing mainly describes the solutions in embodiments of this application from a perspective of interaction between network elements. It may be understood that, to implement the foregoing functions, the network elements, for example, the terminal device, the access network device (for example, the first access network device, the second access network device, and/or the third access network device), and the core network device include at least one of a corresponding hardware structure and software module for performing each function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the access network device, the core network device, and the terminal device may be divided into functional units based on the method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into the units is an example, and is merely logical function division. During actual implementation, there may be another division manner.

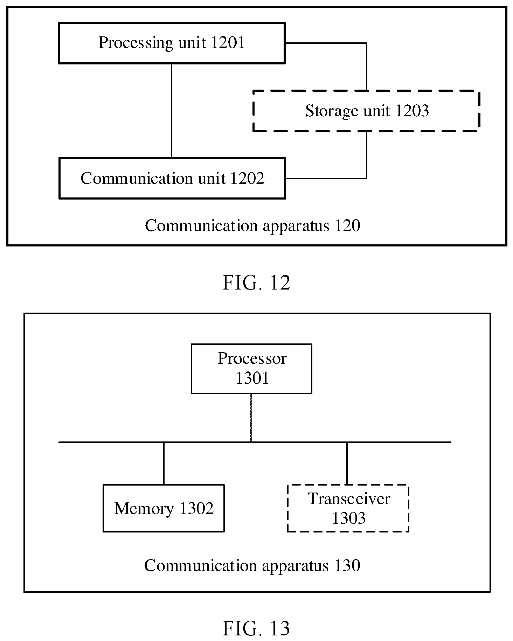

When an integrated unit is used, FIG. 12 is a schematic diagram of a possible structure of a communication apparatus (denoted as a communication apparatus 120) in the foregoing embodiments. The communication apparatus 120 includes a processing unit 1201 and a communication unit 1202, and may further include a storage unit 1203. The schematic diagram of the structure shown in FIG. 12 may be used to show a structure of the access network device, the core network device, or the terminal device in the foregoing embodiments.

When the schematic diagram of the structure shown in FIG. 12 is used to show the structure of the terminal device in the foregoing embodiments, the processing unit 1201 is configured to control and manage an action of the terminal device, for example, control the terminal device to perform S600 and S601 in FIG. 6, S600, S601, S700, S701, and S704 in FIG. 7, S903 in FIG. 9, S1000, S1001, S1006, and S903 in FIG. 10, S1102 to S1106 in FIG. 11, and/or an action performed by the terminal device in another process described in embodiments of this application. The processing unit 1201 may communicate with another network entity through the communication unit 1202, for example, communicate with the first access network device and the second access network device shown in FIG. 2. The storage unit 1203 is configured to store program code and data of the terminal device.

When the schematic diagram of the structure shown in FIG. 12 is used to show the structure of the terminal device in the foregoing embodiments, the communication apparatus 120 may be the terminal device, or may be a chip in the terminal device.

When the schematic diagram of the structure shown in FIG. 12 is used to show a structure of the first access network device in the foregoing embodiments, the processing unit 1201 is configured to control and manage an action of the first access network device, for example, control the first access network device to perform S600 and S601 in FIG. 6, S600, S601, and S700 to S703 in FIG. 7, S900, S901, and S902 in FIG. 9, S900, S902, S1000 to S1003, and S1005 to S1007 in FIG. 10, and/or an action performed by the first access network device in another process described in embodiments of this application. The processing unit 1201 may communicate with another network entity through the communication unit 1202, for example, communicate with the terminal device and the access network device shown in FIG. 2. The storage unit 1203 is configured to store program code and data of the first access network device.

When the schematic diagram of the structure shown in FIG. 12 is used to show the structure of the first access network device in the foregoing embodiments, the communication apparatus 120 may be the first access network device, or may be a chip in the first access network device.

When the schematic diagram of the structure shown in FIG. 12 is used to show a structure of the second access network device in the foregoing embodiments, the processing unit 1201 is configured to control and manage an action of the second access network device, for example, control the second access network device to perform S902 and S903 in FIG. 9, S902, S903, S1003 to S1005, S1008, and S1009 in FIG. 10, and/or an action performed by the second access network device in another process described in embodiments of this application. The processing unit 1201 may communicate with another network entity through the communication unit 1202, for example, communicate with the terminal device and the first access network device shown in FIG. 2. The storage unit 1203 is configured to store program code and data of the second access network device.

When the schematic diagram of the structure shown in FIG. 12 is used to show the structure of the second access network device in the foregoing embodiments, the communication apparatus 120 may be the second access network device, or may be a chip in the second access network device.

When the schematic diagram of the structure shown in FIG. 12 is used to show a structure of the third access network device in the foregoing embodiments, the processing unit 1201 is configured to control and manage an action of the third access network device, for example, control the third access network device to perform S1101, S1102, S1105, and S1106 in FIG. 11, and/or an action performed by the third access network device in another process described in embodiments of this application. The processing unit 1201 may communicate with another network entity through the communication unit 1202, for example, communicate with the terminal device and the first access network device shown in FIG. 2. The storage unit 1203 is configured to store program code and data of the third access network device.

When the schematic diagram of the structure shown in FIG. 12 is used to show the structure of the third access network device in the foregoing embodiments, the communication apparatus 120 may be the third access network device, or may be a chip in the third access network device.

When the schematic diagram of the structure shown in FIG. 12 is used to show the structure of the core network device in the foregoing embodiments, the processing unit 1201 is configured to control and manage an action of the core network device, for example, control the core network device to perform S704 in FIG. 7, S900 in FIG. 9, S900, S1008, and S1009 in FIG. 10, S1100 and S1101 in FIG. 11, and/or an action performed by the terminal device in another process described in embodiments of this application. The processing unit 1201 may communicate with another network entity through the communication unit 1202, for example, communicate with the terminal device and the first core network device shown in FIG. 2. The storage unit 1203 is configured to store program code and data of the core network device.

When the schematic diagram of the structure shown in FIG. 12 is used to show the structure of the core network device in the foregoing embodiments, the communication apparatus 120 may be the core network device, or may be a chip in the core network device.

When the communication apparatus 120 is the terminal device, the access network device, or the core network device, the processing unit 1201 may be a processor or a controller, and the communication unit 1202 may be a communication interface, a transceiver, a transceiver circuit, a transceiver apparatus, or the like. The communication interface is a general term, and may include one or more interfaces. The storage unit 1203 may be a memory. When the communication apparatus 120 is the chip in the terminal device, the access network device, or the core network device, the processing unit 1201 may be a processor or a controller, and the communication unit 1202 may be an input interface and/or an output interface, a pin, a circuit, or the like. The storage unit 1203 may be a storage unit (for example, a register or a cache) in the chip, or may be a storage unit (for example, a read-only memory (read-only memory, ROM for short) or a random access memory (random access memory, RAM for short)) outside the chip and in the terminal device, the access network device, or the core network device.

The communication unit may also be referred to as a transceiver unit. An antenna and a control circuit with sending and receiving functions in the communication apparatus 120 may be considered as the communication unit 1202 of the communication apparatus 120, and a processor with a processing function may be considered as the processing unit 1201 of the communication apparatus 120. Optionally, a component configured to implement the receiving function in the communication unit 1202 may be considered as a receiving unit. The receiving unit is configured to perform a receiving step in embodiments of this application. The receiving unit may be a receiver, a receiver circuit, or the like.

When being implemented in a form of a software functional module and sold or used as an independent product, the integrated unit in FIG. 12 may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium, and includes a plurality of instructions for instructing a computer device (which may be a personal computer, a server, a network device, or the like) or a processor (processor) to perform all or some of the steps of the methods described in embodiments of this application. The storage medium for storing the computer software product includes any medium that can store program code, for example, a USB flash drive, a removable hard disk, a read-only memory, a random access memory, a magnetic disk, or an optical disc.

The unit in FIG. 12 may alternatively be referred to as a module. For example, the processing unit may be referred to as a processing module.

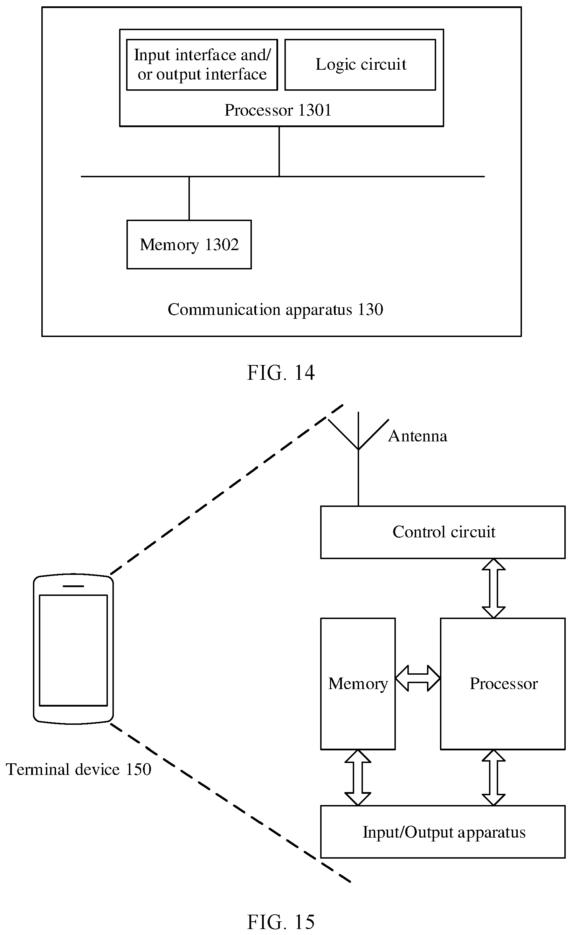

An embodiment of this application further provides a schematic diagram of a hardware structure of a communication apparatus (denoted as a communication apparatus 130). Refer to FIG. 13 or FIG. 14. The communication apparatus 130 includes a processor 1301, and optionally, further includes a memory 1302 connected to the processor 1301.

Refer to FIG. 13. In a first possible implementation, the communication apparatus 130 further includes a transceiver 1303. The processor 1301, the memory 1302, and the transceiver 1303 are connected through a bus. The transceiver 1303 is configured to communicate with another device or a communication network. Optionally, the transceiver 1303 may include a transmitter and a receiver. A component configured to implement a receiving function in the transceiver 1303 may be considered as the receiver. The receiver is configured to perform a receiving step in embodiments of this application. A component configured to implement a sending function in the transceiver 1303 may be considered as the transmitter. The transmitter is configured to perform a sending step in embodiments of this application.

Based on the first possible implementation, the schematic diagram of the structure shown in FIG. 13 may be used to show a structure of the terminal device, the first access network device, the second access network device, the third access network device, or the core network device in the foregoing embodiments.

When the schematic diagram of the structure shown in FIG. 13 is used to show the structure of the terminal device in the foregoing embodiments, the processor 1301 is configured to control and manage an action of the terminal device. For example, the processor 1301 is configured to support the terminal device in performing S600 and S601 in FIG. 6, S600, S601, S700, S701, and S704 in FIG. 7, S903 in FIG. 9, S1000, S1001, S1006, and S903 in FIG. 10, S1102 to S1106 in FIG. 11, and/or an action performed by the terminal device in another process described in embodiments of this application. The processor 1301 may communicate with another network entity through the transceiver 1303, for example, communicate with the first access network device and the second access network device shown in FIG. 2. The memory 1302 is configured to store program code and data of the terminal device.

When the schematic diagram of the structure shown in FIG. 13 is used to show the structure of the first access network device in the foregoing embodiments, the processor 1301 is configured to control and manage an action of the terminal device. For example, the processor 1301 is configured to support the first access network device in performing S600 and S601 in FIG. 6, S600, S601, and S700 to S703 in FIG. 7, S900, S901, and S902 in FIG. 9, S900, S902, S1000 to S1003, and S1005 to S1007 in FIG. 10, and/or an action performed by the first access network device in another process described in embodiments of this application. The processor 1301 may communicate with another network entity through the transceiver 1303, for example, communicate with the terminal device and the access network device shown in FIG. 2. The memory 1302 is configured to store program code and data of the first access network device.

When the schematic diagram of the structure shown in FIG. 13 is used to show the structure of the second access network device in the foregoing embodiments, the processor 1301 is configured to control and manage an action of the second access network device. For example, the processor 1301 is configured to support the second access network device in performing S902 and S903 in FIG. 9, S902, S903, S1003 to S1005, S1008, and S1009 in FIG. 10, and/or an action performed by the second access network device in another process described in embodiments of this application. The processor 1301 may communicate with another network entity through the transceiver 1303, for example, communicate with the terminal device and the core network device shown in FIG. 2. The memory 1302 is configured to store program code and data of the second access network device.

When the schematic diagram of the structure shown in FIG. 13 is used to show the structure of the third access network device in the foregoing embodiments, the processor 1301 is configured to control and manage an action of the third access network device. For example, the processor 1301 is configured to support the third access network device in performing S1101, S1102, S1105, and S1106 in FIG. 11, and/or an action performed by the third access network device in another process described in embodiments of this application. The processor 1301 may communicate with another network entity through the transceiver 1303, for example, communicate with the terminal device and the core network device shown in FIG. 2. The memory 1302 is configured to store program code and data of the third access network device.

When the schematic diagram of the structure shown in FIG. 13 is used to show the structure of the core network device in the foregoing embodiments, the processor 1301 is configured to control and manage an action of the access network device. For example, the processor 1301 is configured to support the access network device in performing S704 in FIG. 7, S900 in FIG. 9, S900, S1008, and S1009 in FIG. 10, S1100 and S1101 in FIG. 11, and/or an action performed by the access network device in another process described in embodiments of this application. The processor 1301 may communicate with another network entity through the transceiver 1303, for example, communicate with the terminal device and the core network device shown in FIG. 1. The memory 1302 is configured to store program code and data of the access network device.

In a second possible implementation, the processor 1301 includes a logic circuit and at least one of an input interface and an output interface. The output interface is configured to perform a sending action in a corresponding method, and the input interface is configured to perform a receiving action in the corresponding method.

Refer to FIG. 14. Based on the second possible implementation, the schematic diagram of the structure shown in FIG. 14 may be used to show a structure of the terminal device, the access network device, or the core network device in the foregoing embodiments.

When the schematic diagram of the structure shown in FIG. 14 is used to show the structure of the terminal device in the foregoing embodiments, the processor 1301 is configured to control and manage an action of the terminal device. For example, the processor 1301 is configured to support the terminal device in performing S600 and S601 in FIG. 6, S600, S601, S700, S701, and S704 in FIG. 7, S903 in FIG. 9, S1000, S1001, S1006, and S903 in FIG. 10, S1102 to S1106 in FIG. 11, and/or an action performed by the terminal device in another process described in embodiments of this application. The processor 1301 may communicate with another network entity through the at least one of the input interface and the output interface, for example, communicate with the first access network device and the second access network device shown in FIG. 2. The memory 1302 is configured to store program code and data of the terminal device.

When the schematic diagram of the structure shown in FIG. 14 is used to show a structure of the first access network device in the foregoing embodiments, the processor 1301 is configured to control and manage an action of the first access network device. For example, the processor 1301 is configured to support the first access network device in performing S600 and S601 in FIG. 6, S600, S601, and S700 to S703 in FIG. 7, S900, S901, and S902 in FIG. 9, S900, S902, S1000 to S1003, and S1005 to S1007 in FIG. 10, and/or an action performed by the first access network device in another process described in embodiments of this application. The processor 1301 may communicate with another network entity through the at least one of the input interface and the output interface, for example, communicate with the terminal device and the access network device shown in FIG. 1. The memory 1302 is configured to store program code and data of the first access network device.

When the schematic diagram of the structure shown in FIG. 14 is used to show a structure of the second access network device in the foregoing embodiments, the processor 1301 is configured to control and manage an action of the second access network device. For example, the processor 1301 is configured to support the second access network device in performing S902 and S903 in FIG. 9, S902, S903, S1003 to S1005, S1008, and S1009 in FIG. 10, and/or an action performed by the second access network device in another process described in embodiments of this application. The processor 1301 may communicate with another network entity through the at least one of the input interface and the output interface, for example, communicate with the terminal device and the first access network device shown in FIG. 2. The memory 1302 is configured to store program code and data of the second access network device.

When the schematic diagram of the structure shown in FIG. 14 is used to show a structure of the third access network device in the foregoing embodiments, the processor 1301 is configured to control and manage an action of the third access network device. For example, the processor 1301 is configured to support the third access network device in performing S1101, S1102, S1105, and S1106 in FIG. 11, and/or an action performed by the third access network device in another process described in embodiments of this application. The processor 1301 may communicate with another network entity through the at least one of the input interface and the output interface, for example, communicate with the terminal device and the first access network device shown in FIG. 2. The memory 1302 is configured to store program code and data of the third access network device.

When the schematic diagram of the structure shown in FIG. 14 is used to show the structure of the core network device in the foregoing embodiments, the processor 1301 is configured to control and manage an action of the core network device. For example, the processor 1301 is configured to support the core network device in performing S704 in FIG. 7, S900 in FIG. 9, S900, S1008, and S1009 in FIG. 10, S1100 and S1101 in FIG. 11, and/or an action performed by the core network device in another process described in embodiments of this application. The processor 1301 may communicate with another network entity through the at least one of the input interface and the output interface, for example, communicate with the terminal device and the first core network device shown in FIG. 2. The memory 1302 is configured to store program code and data of the core network device.

FIG. 13 and FIG. 14 each may alternatively show a system chip in the access network device. In this case, the actions performed by the access network device may be implemented by the system chip. For a specific action performed, refer to the foregoing descriptions. Details are not described herein again. FIG. 13 and FIG. 14 each may alternatively show a system chip in the terminal device. In this case, the actions performed by the terminal device may be implemented by the system chip. For a specific action performed, refer to the foregoing descriptions. Details are not described herein again. FIG. 13 and FIG. 14 each may alternatively show a system chip in the access network device. In this case, the actions performed by the first access network device may be implemented by the system chip. For a specific action performed, refer to the foregoing descriptions. Details are not described herein again.

In addition, embodiments of this application further provide schematic diagrams of hardware structures of a terminal device (denoted as a terminal device 150) and an access network device (denoted as an access network device 160). For details, refer to FIG. 15 and FIG. 14 respectively. The terminal device 150 may be the terminal device or the first access network device.

FIG. 15 is the schematic diagram of the hardware structure of the terminal device 150. For ease of description, FIG. 15 shows only main components of the terminal device. As shown in FIG. 15, the terminal device 150 includes a processor, a memory, a control circuit, an antenna, and an input/output apparatus.

The processor is mainly configured to: process a communication protocol and communication data, control the entire terminal device, execute a software program, and process data of the software program, for example, control the terminal device to perform S600 and S601 in FIG. 6, S600, S601, S700, S701, and S704 in FIG. 7, S903 in FIG. 9, S1000, S1001, S1006, and S903 in FIG. 10, and S1102 to S1106 in FIG. 11.

The memory is mainly configured to store the software program and the data. The control circuit (which may also be referred to as a radio frequency circuit) is mainly configured to perform conversion between a baseband signal and a radio frequency signal, and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to: receive data input by a user and output data to the user.

After the terminal device is powered on, the processor may read the software program in the memory, interpret and execute instructions of the software program, and process the data of the software program. When the processor needs to send data through the antenna, after performing baseband processing on the to-be-sent data, the processor outputs a baseband signal to a control circuit in the control circuit. The control circuit performs radio frequency processing on the baseband signal and then sends a radio frequency signal to the outside in the form of the electromagnetic wave through the antenna. When data is sent to the terminal device, the control circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 15 shows only one memory and one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit are integrated into the processor in FIG. 15. A person skilled in the art may understand that the baseband processor and the central processing unit may alternatively be independent processors, and are interconnected by using a technology, for example, a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in a memory in a form of a software program. The processor executes the software program to implement a baseband processing function.

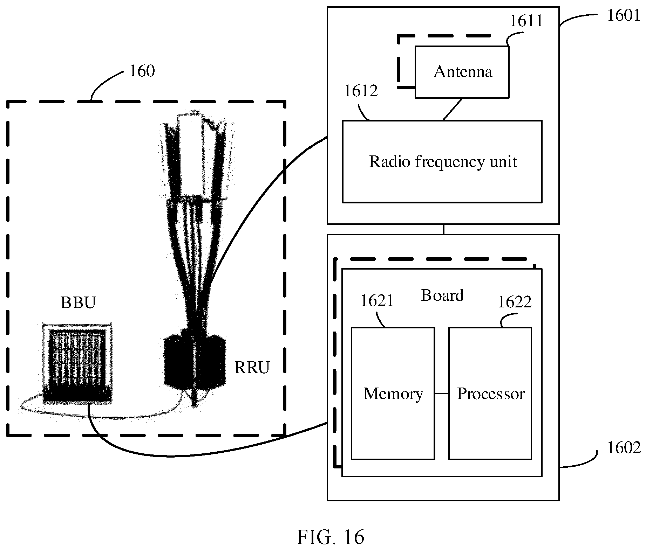

FIG. 16 is the schematic diagram of the hardware structure of the access network device 160. The access network device 160 may include one or more radio frequency units, such as a remote radio unit (remote radio unit, RRU for short) 1601, and one or more baseband units (baseband units, BBUs for short) (which may also be referred to as digital units (digital units, DUs for short)) 1602.

The RRU 1601 may be referred to as a transceiver unit, a transceiver, a transceiver circuit, or the like, and may include at least one antenna 1611 and a radio frequency unit 1612. The RRU 1601 is mainly configured to send and receive a radio frequency signal and perform conversion between the radio frequency signal and a baseband signal. The RRU 1601 and the BBU 1602 may be physically disposed together, or may be physically separate, for example, in a distributed base station.

The BBU 1602 is a control center of the access network device, may also be referred to as a processing unit, and is mainly configured to complete a baseband processing function, for example, channel coding, multiplexing, modulation, or spectrum spreading.

In an embodiment, the BBU 1602 may include one or more boards. A plurality of boards may jointly support a radio access network (for example, an LTE network) of a single access standard, or may separately support radio access networks (such as an LTE network, a 5G network, or another network) of different access standards. The BBU 1602 further includes a memory 1621 and a processor 1622. The memory 1621 is configured to store necessary instructions and data. The processor 1622 is configured to control the access network device to perform a necessary action. The memory 1621 and the processor 1622 may serve the one or more boards. In other words, a memory and a processor may be independently disposed on each board. Alternatively, a plurality of boards may share a same memory and a same processor. In addition, a necessary circuit may further be disposed on each board.

It should be understood that the access network device 160 shown in FIG. 16 can perform S600 and S601 in FIG. 6, S600, S601, and S700 to S703 in FIG. 7, S900, S901, and S902 in FIG. 9, and S900, S902, S1000 to S1003, and S1005 to S1007 in FIG. 10, or S902 and S903 in FIG. 9 and S902, S903, S1003 to S1005, S1008, and S1009 in FIG. 10, or S1101, S1102, S1105, and S1106 in FIG. 11, and/or an action performed by the access network device in another process described in embodiments of this application. Operations or functions or operations and functions of each module in the access network device 160 are separately set to implement corresponding procedures in the foregoing method embodiments. For details, refer to the descriptions in the foregoing method embodiments. To avoid repetition, detailed descriptions are appropriately omitted herein.

In an implementation process, the steps in the methods provided in embodiments may be completed by using a hardware integrated logic circuit in the processor, or by using instructions in a form of software. The steps in the methods disclosed with reference to embodiments of this application may be directly performed by a hardware processor, or may be performed by using a combination of hardware in the processor and a software module.

The processor in this application may include but is not limited to at least one of the following computing devices that run software: a central processing unit (central processing unit, CPU), a microprocessor, a digital signal processor (DSP), a microcontroller unit (microcontroller unit, MCU), an artificial intelligence processor, and the like. Each computing device may include one or more cores configured to perform an operation or processing by executing software instructions. The processor may be an independent semiconductor chip, or may be integrated with another circuit into a semiconductor chip. For example, the processor may form a SoC (system-on-a-chip) with the another circuit (for example, a codec circuit, a hardware acceleration circuit, or various buses and interface circuits). Alternatively, the processor may be integrated into an ASIC as a built-in processor of the ASIC, and the ASIC integrated with the processor may be separately packaged, or may be packaged with the another circuit. In addition to the core configured to perform the operation or processing by executing the software instructions, the processor may further include a necessary hardware accelerator, for example, a field programmable gate array (field programmable gate array, FPGA), a PLD (programmable logic device), or a logic circuit that implements a dedicated logic operation.

The memory in embodiments of this application may include at least one of the following types: a read-only memory (read-only memory, ROM) or another type of static storage device that can store static information and instructions, a random access memory (random access memory, RAM) or another type of dynamic storage device that can store information and instructions, or an electrically erasable programmable read-only memory (Electrically erasable programmable read-only memory, EEPROM). In some scenarios, the memory may alternatively be a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. However, the memory is not limited thereto.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a communication system, including the foregoing terminal device, the first access network device, the second access network device, the core network device, and/or the third access network device.

An embodiment of this application further provides a chip. The chip includes a processor and an interface circuit. The interface circuit is coupled to the processor. The processor is configured to run a computer program or instructions, to implement the foregoing methods. The interface circuit is configured to communicate with another module outside the chip.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instruction is loaded and executed on a computer, the procedures or functions according to the embodiments of this application are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD for short)), or the like.

## Claims

1. A communication method, comprising:
receiving (S900), by a first access network device, third indication information from a core network device, wherein the third indication information indicates an association relationship between an unicast quality of service, QoS, flow and a multicast and broadcast service, MBS, QoS flow;
replacing, by the first access network device, a flow identifier in a data packet header of the MBS QoS flow with the flow identifier of the unicast QoS flow associated with the MBS QoS flow in a handover process; and
forwarding (S902), by the first access network device, the unicast QoS flow after replacing the flow identifier, to a second access network device, the second access network device is an access network device which does not support multicast and broadcast transmission mode.

2. The method according to claim 1, wherein the third indication information comprises a flow identifier of the unicast quality of service flow corresponding to the MBS Qos flow.

3. The method according to claim 1 or 2, wherein the method further comprises:
before the handover process, the first access network device transmits MBS to a terminal device in a multicast transmission mode.

4. The method according to any one of claims 1 to 3, wherein
the handover process is a process wherein a terminal device hands over from the first access network device that supports the multicast and broadcast transmission mode to the second access network device.

5. The method according to any one of claims 1 to 4, wherein before forwarding, by the first access network device, the unicast quality of service flow to a second network device, the method further comprises:
sending, to the second access network device, a handover request, wherein the handover request comprises information of a multicast and broadcast service;
receiving, from the second access network device, handover request acknowledgment information, wherein the handover request acknowledgment information comprises the first configuration information, the first configuration information is a full configuration, wherein the full configuration indicates the terminal device to perform configuration fully based on configuration information of the second access network device instead of performing incremental configuration based on the configuration information of the second access network device.

6. The method according to any one of claims 1 to 5, wherein the method further comprises: the first access network device determines, by performing signaling interaction with the second access network device, that the second access network device does not support the multicast and broadcast transmission mode.

7. The method according to any one of claims 1 to 6, wherein the method further comprises:
sending, by the first access network device, first indication information to a terminal device, wherein the first indication information indicates the terminal device to configure a first radio bearer as a second radio bearer, the first radio bearer is a multicast radio bearer, and the second radio bearer is a unicast radio bearer; and
sending, by the first access network device to the terminal device, an MBS through the second radio bearer.

8. The method according to claim 7, wherein the first indication information specifically indicates at least one of the following information of the second radio bearer: packet data convergence protocol, PDCP, configuration information, radio link control, RLC, configuration information, security configuration information, and an identifier of the second radio bearer.

9. The method according to claim 7 or 8, wherein the method further comprises:
before the handover process, sending to the terminal device, the first indication information.

10. Aₙ apparatus, wherein the apparatus is a first access network device, comprising:
means for receiving third indication information from a core network device, wherein the third indication information indicates an association relationship between an unicast quality of service, QoS, flow and a multicast and broadcast service, MBS, QoS flow;
means for replacing a flow identifier in a data packet header of the MBS QoS flow with the flow identifier of the unicast QoS flow associated with the MBS QoS flow in a handover process; and
means for forwarding the unicast QoS flow after replacing the flow identifier to a second access network device, the second access network device is an access network device which does not support multicast and broadcast transmission mode.

11. The apparatus according to claim 10, wherein the third indication information comprises a flow identifier of the unicast quality of service flow corresponding to the MBS QoS flow.

12. The apparatus according to claim 10 or 11, wherein the apparatus further comprises means for transmitting MBS to a terminal device in a multicast transmission mode before the handover process.

13. The apparatus according to any one of claims 10 to 12, wherein the apparatus further comprises means for sending, to the second access network device, a handover request, wherein the handover request comprises information of a multicast and broadcast service;
means for receiving, from the second access network device, handover request acknowledgment information, wherein the handover request acknowledgment information comprises the first configuration information, the first configuration information is a full configuration, wherein the full configuration indicates the terminal device to perform configuration fully based on configuration information of the second access network device instead of performing incremental configuration based on the configuration information of the second access network device.

14. The apparatus according to any one of claims 10 to 13, wherein the apparatus further comprises means for determining by performing signaling interaction with the second access network device, that the second access network device does not support the multicast and broadcast transmission mode.

15. The apparatus according to any one of claims 10 to 14, wherein the apparatus further comprises means for sending first indication information to a terminal device, wherein the first indication information indicates the terminal device to configure a first radio bearer as a second radio bearer, the first radio bearer is a multicast radio bearer, and the second radio bearer is a unicast radio bearer; and
sending to the terminal device, an MBS through the second radio bearer.

16. The apparatus according to claim 15, wherein the first indication information specifically indicates at least one of the following information of the second radio bearer: packet data convergence protocol, PDCP, configuration information, radio link control, RLC, configuration information, security configuration information, and an identifier of the second radio bearer.

17. A computer program product, comprising instructions, wherein when the instructions are executed by a first access network device, the method according to any one of claims 1 to 9 is implemented.

## Patentansprüche

1. Kommunikationsverfahren, das Folgendes umfasst:
Empfangen (S900), durch eine erste Zugangsnetzvorrichtung, von dritten Angabeinformationen von einer Kernnetzvorrichtung, wobei die dritten Angabeinformationen eine Assoziationsbeziehung zwischen einem Unicast-Dienstgüte- bzw. QoS-Fluss und einem Multicast-und-Broadcast-Dienst- bzw. MBS-QoS-Fluss angeben;
Ersetzen, durch die erste Zugangsnetzvorrichtung, einer Flusskennung in einem Datenpaketheader des MBS-QoS-Flusses mit der Flusskennung des mit dem MBS-QoS-Fluss assoziierten Unicast-QoS-Flusses in einem Übergabeprozess; und
Weiterleiten (S902), durch die erste Zugangsnetzvorrichtung, des Unicast-QoS-Flusses nach dem Ersetzen der Flusskennung an eine zweite Zugangsnetzvorrichtung, wobei die zweite Zugangsnetzvorrichtung eine Zugangsnetzvorrichtung ist, die einen Multicast-und-Broadcast-Übertragungsmodus nicht unterstützt.

2. Verfahren nach Anspruch 1, wobei die dritten Angabeinformationen eine Flusskennung des dem MBS-QoS-Fluss entsprechenden Unicast-Dienstgüteflusses umfassen.

3. Verfahren nach Anspruch 1 oder 2, wobei das Verfahren ferner Folgendes umfasst:
vor dem Übergabeprozess überträgt die erste Zugangsnetzvorrichtung MBS an eine Endgerätevorrichtung in einem Multicast-Übertragungsmodus.

4. Verfahren nach einem der Ansprüche 1 bis 3, wobei
der Übergabeprozess ein Prozess ist, in dem eine Endgerätevorrichtung eine Übergabe von der ersten Zugangsnetzvorrichtung, die den Multicast-und-Broadcast-Übertragungsmodus unterstützt, zu der zweiten Zugangsnetzvorrichtung durchführt.

5. Verfahren nach einem der Ansprüche 1 bis 4, wobei das Verfahren vor dem Weiterleiten, durch die erste Zugangsnetzvorrichtung, des Unicast-Dienstgüteflusses an eine zweite Netzvorrichtung ferner Folgendes umfasst:
Senden, an die zweite Zugangsnetzvorrichtung, einer Übergabeanforderung, wobei die Übergabeanforderung Informationen eines Multicast-und-Broadcast-Dienstes umfasst;
Empfangen, von der zweiten Zugangsnetzvorrichtung, von Übergabeanforderungsbestätigungsinformationen, wobei die Übergabeanforderungsbestätigungsinformationen die ersten Konfigurationsinformationen umfassen, die ersten Konfigurationsinformationen eine vollständige Konfiguration sind, wobei die vollständige Konfiguration der Endgerätevorrichtung angibt, eine Konfiguration vollständig basierend auf Konfigurationsinformationen der zweiten Zugangsnetzvorrichtung durchzuführen, anstatt eine inkrementelle Konfiguration basierend auf den Konfigurationsinformationen der zweiten Zugangsnetzvorrichtung durchzuführen.

6. Verfahren nach einem der Ansprüche 1 bis 5, wobei das Verfahren ferner Folgendes umfasst:
die erste Zugangsnetzvorrichtung bestimmt, durch Durchführen einer Signalisierungsinteraktion mit der zweiten Zugangsnetzvorrichtung, dass die zweite Zugangsnetzvorrichtung den Multicast-und-Broadcast-Übertragungsmodus nicht unterstützt.

7. Verfahren nach einem der Ansprüche 1 bis 6, wobei das Verfahren ferner Folgendes umfasst:
Senden, durch die erste Zugangsnetzvorrichtung, von ersten Angabeinformationen an eine Endgerätevorrichtung, wobei die ersten Angabeinformationen der Endgerätevorrichtung angeben, einen ersten Funkträger als einen zweiten Funkträger zu konfigurieren, der erste Funkträger ein Multicast-Funkträger ist und der zweite Funkträger ein Unicast-Funkträger ist; und
Senden, durch die erste Zugangsnetzvorrichtung an die Endgerätevorrichtung, eines MBS über den zweiten Funkträger.

8. Verfahren nach Anspruch 7, wobei die ersten Angabeinformationen insbesondere mindestens eine der folgenden Informationen des zweiten Funkträgers angeben: Paketdatenkonvergenzprotokoll- bzw. PDCP-Konfigurationsinformationen, Funkverbindungssteuerungs- bzw. RLC-Konfigurationsinformationen, Sicherheitskonfigurationsinformationen und eine Kennung des zweiten Funkträgers.

9. Verfahren nach Anspruch 7 oder 8, wobei das Verfahren ferner Folgendes umfasst:
vor dem Übergabeprozess, Senden, an die Endgerätevorrichtung, der ersten Angabeinformationen.

10. Einrichtung, wobei die Einrichtung eine erste Zugangsnetzwerkvorrichtung ist, umfassend:
Mittel zum Empfangen von dritten Angabeinformationen von einer Kernnetzvorrichtung, wobei die dritten Angabeinformationen eine Assoziationsbeziehung zwischen einem Unicast-Dienstgüte- bzw. QoS-Fluss und einem Multicast-und-Broadcast-Dienst- bzw. MBS-QoS-Fluss angeben;
Mittel zum Ersetzen einer Flusskennung in einem Datenpaketheader des MBS-QoS-Flusses mit der Flusskennung des mit dem MBS-QoS-Fluss assoziierten Unicast-QoS-Flusses in einem Übergabeprozess; und
Mittel zum Weiterleiten des Unicast-QoS-Flusses nach dem Ersetzen der Flusskennung an eine zweite Zugangsnetzvorrichtung, wobei die zweite Zugangsnetzvorrichtung eine Zugangsnetzvorrichtung ist, die einen Multicast-und-Broadcast-Übertragungsmodus nicht unterstützt.

11. Einrichtung nach Anspruch 10, wobei die dritten Angabeinformationen eine Flusskennung des dem MBS-QoS-Fluss entsprechenden Unicast-Dienstgüteflusses umfassen.

12. Einrichtung nach Anspruch 10 oder 11, wobei die Einrichtung ferner Mittel zum Übertragen von MBS an eine Endgerätevorrichtung in einem Multicast-Übertragungsmodus vor dem Übergabeprozess umfasst.

13. Verfahren nach einem der Ansprüche 10 bis 12, wobei die Einrichtung ferner Mittel zum Senden, an die zweite Zugangsnetzvorrichtung, einer Übergabeanforderung umfasst, wobei die Übergabeanforderung Informationen eines Multicast-und-Broadcast-Dienstes umfasst;
Mittel zum Empfangen, von der zweiten Zugangsnetzvorrichtung, von Übergabeanforderungsbestätigungsinformationen, wobei die Übergabeanforderungsbestätigungsinformationen die ersten Konfigurationsinformationen umfassen, die ersten Konfigurationsinformationen eine vollständige Konfiguration sind, wobei die vollständige Konfiguration der Endgerätevorrichtung angibt, eine Konfiguration vollständig basierend auf Konfigurationsinformationen der zweiten Zugangsnetzvorrichtung durchzuführen, anstatt eine inkrementelle Konfiguration basierend auf den Konfigurationsinformationen der zweiten Zugangsnetzvorrichtung durchzuführen.

14. Einrichtung nach einem der Ansprüche 10 bis 13, wobei die Einrichtung ferner Mittel zum Bestimmen, durch Durchführen einer Signalisierungsinteraktion mit der zweiten Zugangsnetzvorrichtung, dass die zweite Zugangsnetzvorrichtung den Multicast-und-Broadcast-Übertragungsmodus nicht unterstützt, umfasst.

15. Einrichtung nach einem der Ansprüche 10 bis 14, wobei die Einrichtung ferner Mittel zum Senden von ersten Angabeinformationen an eine Endgerätevorrichtung umfasst, wobei die ersten Angabeinformationen der Endgerätevorrichtung angeben, einen ersten Funkträger als einen zweiten Funkträger zu konfigurieren, der erste Funkträger ein Multicast-Funkträger ist und der zweite Funkträger ein Unicast-Funkträger ist; und
Senden, an die Endgerätevorrichtung, eines MBS über den zweiten Funkträger.

16. Einrichtung nach Anspruch 15, wobei die ersten Angabeinformationen insbesondere mindestens eine der folgenden Informationen des zweiten Funkträgers angeben: Paketdatenkonvergenzprotokoll- bzw. PDCP-Konfigurationsinformationen, Funkverbindungssteuerungs- bzw. RLC-Konfigurationsinformationen, Sicherheitskonfigurationsinformationen und eine Kennung des zweiten Funkträgers.

17. Computerprogrammprodukt, das Anweisungen umfasst, wobei bei Ausführung der Anweisungen durch eine erste Zugangsnetzwerkvorrichtung das Verfahren nach einem der Ansprüche 1 bis 9 implementiert wird.

## Revendications

1. Procédé de communication, comprenant :
la réception (S900), par un premier dispositif de réseau d'accès, de troisièmes informations d'indication en provenance d'un dispositif de cœur de réseau, les troisièmes informations d'indication indiquant une relation d'association entre un flux de qualité de service, QoS, en unicast et un flux de QoS de service en multicast et broadcast, MBS ;
le remplacement, par le premier dispositif de réseau d'accès, d'un identificateur de flux dans un en-tête de paquet de données du flux de QoS de MBS par l'identificateur de flux du flux de QoS en unicast associé au flux de QoS de MBS lors d'un processus de transfert intercellulaire ; et
l'acheminement (S902), par le premier dispositif de réseau d'accès, du flux de QoS en unicast après le remplacement de l'identificateur de flux, vers un deuxième dispositif de réseau d'accès, le deuxième dispositif de réseau d'accès étant un dispositif de réseau d'accès qui ne prend pas en charge un mode de transmission en multicast et broadcast.

2. Procédé selon la revendication 1, dans lequel les troisièmes informations d'indication, comprennent un identificateur de flux du flux de qualité de service en unicast correspondant au flux de QoS de MBS.

3. Procédé selon la revendication 1 ou 2, le procédé comprenant en outre :
avant le processus de transfert intercellulaire, la transmission, par le premier dispositif de réseau d'accès, d'un MBS à un dispositif terminal dans un mode de transmission en multicast.

4. Procédé selon l'une quelconque des revendications 1 à 3, dans lequel
le processus de transfert intercellulaire est un processus de transfert intercellulaire d'un dispositif terminal depuis le premier dispositif de réseau d'accès qui prend en charge le mode de transmission en multicast et broadcast vers le deuxième dispositif de réseau d'accès.

5. Procédé selon l'une quelconque des revendications 1 à 4, le procédé comprenant en outre, avant l'acheminement, par le premier dispositif de réseau d'accès, du flux de qualité de service en unicast vers un deuxième dispositif de réseau :
l'envoi, au deuxième dispositif de réseau d'accès, d'une demande de transfert intercellulaire, la demande de transfert intercellulaire comprenant des informations relatives à un service en multicast et broadcast ;
la réception, en provenance du deuxième dispositif de réseau d'accès, d'informations d'acquittement de la demande de transfert intercellulaire, les informations d'acquittement de la demande de transfert intercellulaire comprenant les premières informations de configuration, les premières informations de configuration constituant une configuration complète, la configuration complète indiquant au dispositif terminal de réaliser une configuration de manière complète sur la base d'informations de configuration relatives au deuxième dispositif de réseau d'accès au lieu de réaliser une configuration incrémentale sur la base des informations de configuration relatives au deuxième dispositif de réseau d'accès.

6. Procédé selon l'une quelconque des revendications 1 à 5, le procédé comprenant en outre :
la détermination, par le premier dispositif de réseau d'accès, au moyen d'une interaction de signalisation avec le deuxième dispositif de réseau d'accès, que le deuxième dispositif de réseau d'accès ne prend pas en charge le mode de transmission en multicast et broadcast.

7. Procédé selon l'une quelconque des revendications 1 à 6, le procédé comprenant en outre :
l'envoi, par le premier dispositif de réseau d'accès, de premières informations d'indication à un dispositif terminal, les premières informations d'indication indiquant au dispositif terminal de configurer un premier support radio en tant que deuxième support radio, le premier support radio étant un support radio en multicast, et le deuxième support radio étant un support radio en unicast ; et
l'envoi, par le premier dispositif de réseau d'accès au dispositif terminal, d'un MBS via le deuxième support radio.

8. Procédé selon la revendication 7, dans lequel les premières informations d'indication indiquent spécifiquement au moins un élément dans le groupe d'informations suivantes relatives au deuxième support radio, constitué par : des informations de configuration du protocole de convergence de données en mode paquet, PDCP, des informations de configuration du contrôle de liaison radio, RLC, des informations de configuration de sécurité, et un identificateur du deuxième support radio.

9. Procédé selon la revendication 7 ou 8, le procédé comprenant en outre :
avant le processus de transfert intercellulaire, l'envoi, au dispositif terminal, des premières informations d'indication.

10. Appareil, l'appareil étant un premier dispositif de réseau d'accès, comprenant :
des moyens de réception de troisièmes informations d'indication en provenance d'un dispositif de cœur de réseau, les troisièmes informations d'indication indiquant une relation d'association entre un flux de qualité de service, QoS, en unicast et un flux de QoS de service en multicast et broadcast, MBS ;
des moyens de remplacement d'un identificateur de flux dans un en-tête de paquet de données du flux de QoS de MBS par l'identificateur de flux du flux de QoS en unicast associé au flux de QoS de MBS lors d'un processus de transfert intercellulaire ; et
des moyens d'acheminement du flux de QoS en unicast, après le remplacement de l'identificateur de flux, vers un deuxième dispositif de réseau d'accès, le deuxième dispositif de réseau d'accès étant un dispositif de réseau d'accès qui ne prend pas en charge un mode de transmission en multicast et broadcast.

11. Appareil selon la revendication 10, dans lequel les troisièmes informations d'indication comprennent un identificateur de flux du flux de qualité de service en unicast correspondant au flux de QoS de MBS.

12. Appareil selon la revendication 10 ou 11, l'appareil comprenant en outre des moyens de transmission d'un MBS à un dispositif terminal dans un mode de transmission en multicast avant le processus de transfert intercellulaire.

13. Appareil selon l'une quelconque des revendications 10 à 12, l'appareil comprenant en outre des moyens d'envoi, au deuxième dispositif de réseau d'accès, d'une demande de transfert intercellulaire, la demande de transfert intercellulaire comprenant des informations relatives à un service en multicast et broadcast ;
des moyens de réception, en provenance du deuxième dispositif de réseau d'accès, d'informations d'acquittement de la demande de transfert intercellulaire, les informations d'acquittement de la demande de transfert intercellulaire comprenant les premières informations de configuration, les premières informations de configuration constituant une configuration complète, la configuration complète indiquant au dispositif terminal de réaliser une configuration de manière complète sur la base d'informations de configuration relatives au deuxième dispositif de réseau d'accès au lieu de réaliser une configuration incrémentale sur la base des informations de configuration relatives au deuxième dispositif de réseau d'accès.

14. Appareil selon l'une quelconque des revendications 10 à 13, l'appareil comprenant en outre des moyens de détermination, au moyen d'une interaction de signalisation avec le deuxième dispositif de réseau d'accès, que le deuxième dispositif de réseau d'accès ne prend pas en charge le mode de transmission en multicast et broadcast.

15. Appareil selon l'une quelconque des revendications 10 à 14, l'appareil comprenant en outre des moyens d'envoi de premières informations d'indication à un dispositif terminal, les premières informations d'indication indiquant au dispositif terminal de configurer un premier support radio en tant que deuxième support radio, le premier support radio étant un support radio en multicast, et le deuxième support radio étant un support radio en unicast ; et
d'envoi, au dispositif terminal, d'un MBS via le deuxième support radio.

16. Appareil selon la revendication 15, dans lequel les premières informations d'indication indiquent spécifiquement au moins un élément dans le groupe d'informations suivantes relatives au deuxième support radio, constitué par : des informations de configuration du protocole de convergence de données en mode paquet, PDCP, des informations de configuration du contrôle de liaison radio, RLC, des informations de configuration de sécurité, et un identificateur du deuxième support radio.

17. Produit programme d'ordinateur, comprenant des instructions qui, lorsqu'elles sont exécutées par un premier dispositif de réseau d'accès, permettent la mise en œuvre du procédé selon l'une quelconque des revendications 1 à 9.
